(19) Europäisches Patentamt
European Patent Office
Office européen des brevets

(11) **EP 1 959 342 A1**

(12) **EUROPEAN PATENT APPLICATION**
published in accordance with Art. 158(3) EPC

(43) Date of publication:
**20.08.2008 Bulletin 2008/34**

(51) Int Cl.:
***G06F 3/14*** (2006.01)

(21) Application number: **06833169.3**

(22) Date of filing: **22.11.2006**

(86) International application number:
**PCT/JP2006/323347**

(87) International publication number:
**WO 2007/061003 (31.05.2007 Gazette 2007/22)**

(84) Designated Contracting States:
**DE FR GB**

(30) Priority: **24.11.2005 JP 2005339363**

(71) Applicant: **Sharp Kabushiki Kaisha**
**Osaka-shi, Osaka 545-8522 (JP)**

(72) Inventors:
• **ZAIMA, Hiroaki**
**Nara 639-1123 (JP)**

• **SAKAKURA, Kentarou**
**Nara 639-1132 (JP)**

(74) Representative: **Müller - Hoffmann & Partner**
**Patentanwälte,**
**Innere Wiener Strasse 17**
**81667 München (DE)**

(54) **INFORMATION PROCESSING DEVICE, METHOD FOR CONTROL OF INFORMATION PROCESSING DEVICE, CONTROL PROGRAM OF INFORMATION PROCESSING DEVICE, AND RECORDING MEDIUM HAVING CONTROL PROGRAM OF INFORMATION PROCESSING DEVICE RECORDED THEREIN**

(57)     A mobile communication device (1) includes a display section (2) for displaying an icon in a specific display style. Moreover, the mobile communication device (1) includes: a display data generating section (14) for generating, in accordance with icon data (24) for specifying a process that can be performed in the mobile communication device (1) and scenario data (21) serving as information for prescribing a display style to be adopted in the display section (2), display data for displaying the icon; and a display control section 15 for performing display control on the display section (2) in accordance with the display data thus generated. Therefore, the display style of the icon can be easily changed by changing the scenario data (21) and the icon data (24). This makes it possible to reduce the amount of data to be stored, and to switch among various display styles of the icon data (24).

FIG. 1

EP 1 959 342 A1

**Description**

TECHNICAL FIELD

The present invention relates to an information processing device including a display section for displaying information in a specific display style, an information processing device control method, an information processing device control program, and a recording medium having an information processing device control program recorded therein.

BACKGROUND ART

In recent years, an information processing device such as a personal computer or a mobile phone has embodied a so-called graphical user interface (hereinafter referred to as "GUI") that presents information graphically so that a user can easily operate the device by using input means such as an operation key, a mouse, or a pointing device.

In order to realize such a GUI, for example, UNIX® or Linux is equipped with an X Window System (see Non-patent Document 1: Matt Chapman, "Window Managers for X", [online], [retrieved on May 23, 2005], Internet <URL: http://xwinman.org/> and Non-patent Document 2: www.linux.or.jp Administration Group (Webmasters), "Selecting a Window Manager", [online], [retrieved on May 23, 2005], Internet <URL: http://www.linux.or.jp/JF/JFdocs/Xwindow-User-HOWTO -3.html>). The "X Window System" is being developed in accordance with the principle that the elimination of all those involved in user interfaces makes it easier to build free user interfaces by using applications.

For this reason, the "X Window System" administers changes in position, size, and decoration of a window, iconization, or the like by using a client program called a window manager. Moreover, by changing the design of the window manager, GUIs of various operational feelings can be provided.

Meanwhile, in order to improve user operationality, a mobile phone expresses each function of the mobile phone as an icon so that the function can be shown intuitively. Moreover, by selecting and setting the icon by using an operation key or the like, a user can give an instruction to activate the function.

For example, a "W21CA" manufactured by Casio Computer Co., Ltd. allows a user to select a desired icon by downloading such an icon as described above. It should be noted that the "W21 CA" realizes the menu-screen icon by adopting "Flash Lite®" of "Macromedia®", which serves as a tool for creating animated WEB content (see Non-patent Document 3: Macromedia, Inc., "Macromedia Flash MX 2004", [online], [retrieved on May 23, 2005], Internet <URL: http: //macromedia.com/jp/software/flash/> and Non-patent Document 4: Casio Computer Co., Ltd., "Product Information", "Enjoying Useful Functions of W21CA", [online], [retrieved on May 23, 2005], Internet <URL: http://www.casio.co.jp/k-tai/w21ca/detai16.html>).

However, according to the conventional arrangement, a user who wishes to change the display style, such as design and location, of an icon is required, for example, in the case of UNIX, to change the settings by altering a relatively complex program such as the window manager described above. For this reason, in order to make a change in display style of an icon, the user is forced to perform an arduous task.

Further, for example, every time the design or location of an icon on a menu screen is changed, the mobile phone requires display data for displaying a menu screen corresponding to that change. For example, even in cases where only the location of an icon is changed without changing the design of the icon or a function associated with the icon, it is necessary to prepare new data for displaying a menu screen corresponding to the changed location of the icon. Thus, the mobile phone requires new display data every time there occurs a change in display style, so that the amount of display data to be stored increases as the number of patterns of changes in display style increases.

DISCLOSURE OF INVENTION

The present invention has been made in view of the foregoing problems, and it is an object of the present invention to provide an information processing device, an information processing device control method, an information processing device control program, and a recording medium having an information processing device control program recorded therein, each of which reduces the amount of data to be stored and makes it possible to easily change the display style of identification data.

In order to attain the foregoing object, an information processing device according to the present invention is an information processing device including a display section for displaying information in a specific display style, the information processing device including: generating means for generating, in accordance with (i) identification data for specifying a process that is executable in the information processing device and (ii) scenario data serving as information for prescribing a display of the identification data on a display area of the display section, display control information by which the identification data is displayed in the specific display style; and display control means for performing display control on the display section in accordance with the display control information generated by the generating means.

The "information for prescribing a display... on a display area" here means rules related to a method for expressing identification data to be presented to a user. For example, the information prescribes the display state of identification data and the location of identification data to be displayed on the display area.

According to the foregoing arrangement, the provision of the generating means makes it possible to generate display control information in accordance with data separated into identification data and scenario data. Further, the provision of the display control means makes it possible to display the identification data in the specific display style on the display section in accordance with the display control information thus generated.

This enables the information processing device according to the present invention, for example, to change the display of the identification data on the display area to another display simply by changing only the scenario data to another piece of scenario data. Further, for example, the identification data can be changed to another type of identification data.

In such a case where the display of the identification data on the display area is changed, it is only necessary to change only the scenario data, or it is possible to change the identification data to another piece of identification data. This brings about an effect of making it possible to easily change the display style of identification data without the need of a process of changing a large program such as a UNIX window manager.

Further, in order to attain the foregoing object, a method according to the present invention for controlling an information processing device is a method for controlling an information processing device including a display section for displaying information in a specific display style, the method including the steps of: generating, in accordance with (i) identification data for specifying a process that is executable in the information processing device and (ii) scenario data serving as information for prescribing a display of the identification data on a display area of the display section, display control information by which the identification data is displayed in the specific display style; and performing display control on the display section in accordance with the display control information generated thus generated.

The foregoing method makes it possible, in the step of generating display control information, to generate display control information in accordance with data separated into identification data and scenario data. Further, the foregoing method makes it possible, in the step of performing display control, to display the identification data in the specific display style on the display section in accordance with the display control information thus generated.

This brings about an effect of making it possible to easily change the display style of identification data without the need of a process of changing a large program such as a UNIX window manager.

Additional objects, features, and strengths of the present invention will be made clear by the description below. Further, the advantages of the present invention will be evident from the following explanation in reference to the drawings.

BRIEF DESCRIPTION OF DRAWINGS

Fig. 1, showing an embodiment of the present invention, is a block diagram showing an arrangement of a main part of a mobile communication device.

Fig. 2, showing an embodiment of the present invention, schematically shows an arrangement of the mobile communication device.

Fig. 3 shows an example of a menu screen that is displayed by a display section of a mobile communication device according to the present embodiment.

Fig. 4(a), showing an embodiment of the present invention, shows an example of a display that specifies a selected icon on the menu screen.

Fig. 4(b), showing an embodiment of the present invention, shows an example of a display that specifies a selected icon on the menu screen.

Fig. 5 shows an example of a case where the mobile communication device of the present embodiment displays only scenario data.

Fig. 6 shows an example of table information according to the present embodiment.

Fig. 7 shows an example of a case where the mobile communication device of the present embodiment displays only the scenario data.

Fig. 8 is a flow chart showing a process of displaying a menu screen in the mobile communication device according to the present embodiment.

Fig. 9 is a flow chart showing a process of selecting an icon in the mobile communication device according to the present embodiment.

Fig. 10 shows another example of a menu screen that is displayed by the display section of the mobile communication device according to the present embodiment.

Fig. 11 shows an example of a case where the mobile communication device of the present embodiment displays only another piece of scenario data.

Fig. 12 shows an example of a case where the mobile communication device of the present embodiment displays separate scenarios 1 and 2.

Fig. 13, showing an example of the table information according to the present embodiment, shows display images of icons to be displayed in accordance with the respective pieces of icon data, information related to functions respectively specified by the icons, and table numbers respectively associated with the display images and the function-related information.

Fig. 14 shows a combination of icons to be displayed respectively in display positions prescribed by each of the scenarios 1 and 2 according to the present embodiment.

Fig. 15 shows examples of patterns of display forms of the display section of the mobile communication device according to the present embodiment.

Fig. 16 shows an example of correspondence between a display area and icon data to be displayed in the display area.

Fig. 17 shows an example of a change in display state of an icon in the display section of the mobile communication device according to the present embodiment.

Fig. 18(a), showing an example of a menu screen that is displayed by the display section of the mobile communication device according to the present embodiment, shows an example of how the menu screen is displayed in the default settings.

Fig. 18(b), showing an example of a menu screen that is displayed by the display section of the mobile communication device according to the present embodiment, shows an example of how the menu screen is displayed in cases where the camera function is in a selection state.

Fig. 19(a), showing an example of a case where the mobile communication device of the present embodiment displays only the scenario data, shows an example of scenario data for displaying the menu screen of Fig. 18(a).

Fig. 19(b), showing an example of a case where the mobile communication device of the present embodiment displays only the scenario data, shows an example of scenario data for displaying the menu screen of Fig. 18(b).

Fig. 20 shows another example of a menu screen that is displayed by the display section of the mobile communication device according to the present embodiment.

Fig. 21 shows another example of a case where the mobile communication device of the present embodiment displays only scenario data.

Fig. 22 shows an example of a data structure of scenario data.

Fig. 23(a), showing the present embodiment, shows an example of a display state of a selection-indicating image.

Fig. 23(b), showing the present embodiment, shows an example of a display state of a selection-indicating image.

Fig. 23(c), showing the present embodiment, shows an example of a display state of a selection-indicating image.

Fig. 24 shows an example of the case of a hypothetical display of scenario data related to a display of a selection-indicating image.

Fig. 25 shows an example of icon data display information and transition information that are contained in the scenario data.

Fig. 26 shows an example of timing-prescribing information contained in the scenario data.

Fig. 27 shows another example of timing-prescribing information contained in the scenario data.

Fig. 28 shows an example of decision state transition information according to the present embodiment.

BEST MODE FOR CARRYING OUT THE INVENTION

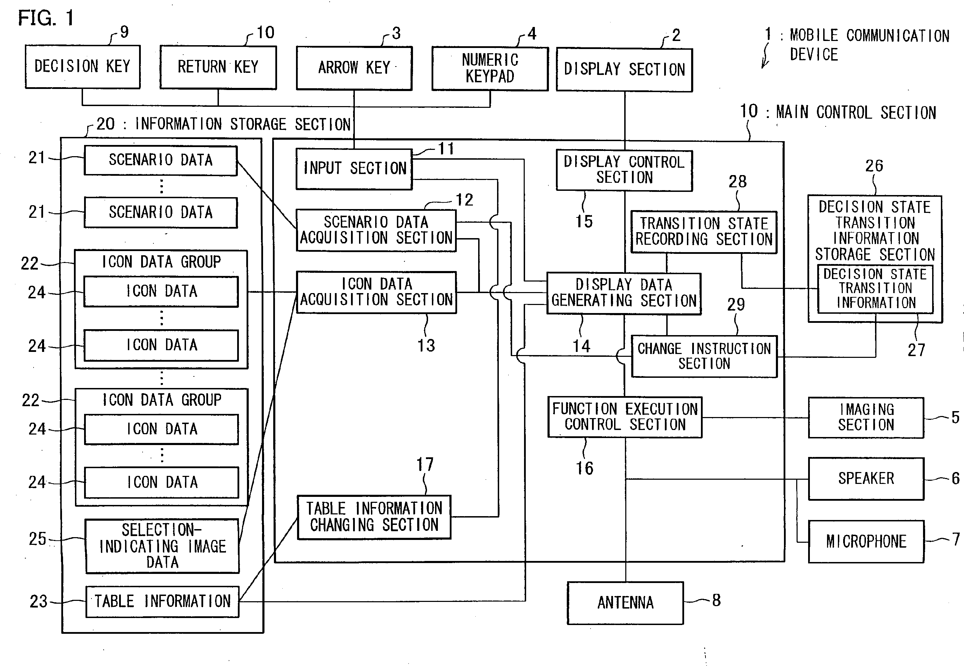

An embodiment of the present invention will be described below with reference to Figs. 1 through 21. That is, a mobile communication device (information processing device) 1 according to the present embodiment is a communication device, carried by a user, which has a telephone function of making a call to another telephone in accordance with an operation instruction (input information) given from the user and a mail function of exchanging e-mails with another communication device, a personal computer, or the like. Furthermore, the mobile communication device 1 includes an imaging section 5 so as to have a photograph function of taking a photograph of a subject and retaining the photograph as data.

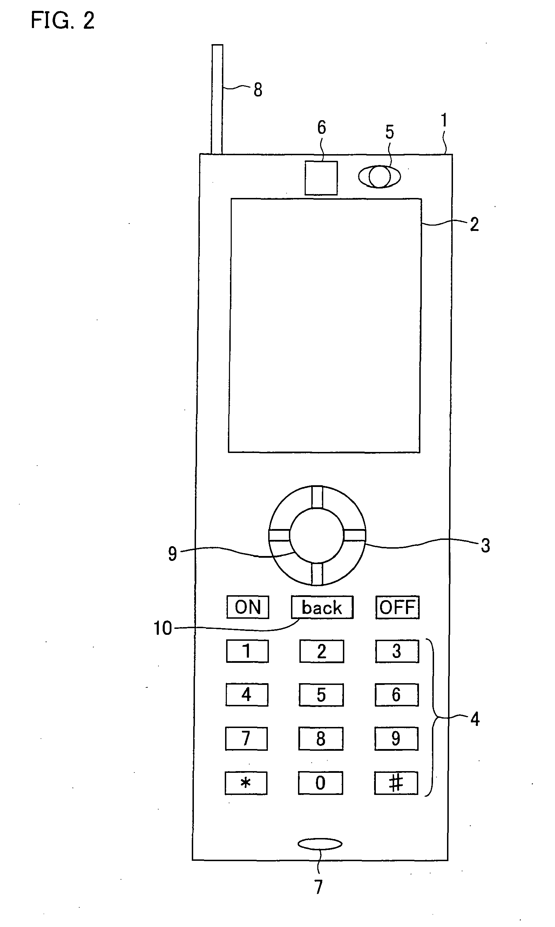

As shown in Fig. 2, the mobile communication device 1 according to the present embodiment includes a display section 2 as output means, and includes an arrow key 3, a numeric keypad 4, a decision key 9, and a return key 10 as input means. The mobile communication device 1 makes it possible to perform the following input operations by using these input means. That is, a pressing of the arrow key 3 can trigger a change in selection state of a display item expressed by an icon image, a character string, or the like, and a pressing of the decision key 9 can trigger an instruction to activate an application corresponding to a display item currently selected or to display another menu. Further, a pressing of a key of the numeric keypad 4 can bring, into a selection state, a display item corresponding to the key thus pressed, or can trigger an instruction to display another menu corresponding to the key thus pressed. Further, the mobile communication device 1 has such an application as to give an instruction to perform a decision operation simultaneously with a selection state, and the application can be activated by pressing a key of the numeric keypad 4. Further, a pressing of the return key 10 can trigger a return to a menu displayed at the time of the previous operation (one operation before the current operation). Further, in order to realize the telephone function, the mobile communication device 1 includes a speaker section 6 for outputting sound from another telephone, a microphone section 7 for inputting sound, and an antenna section 8 for transmitting and receiving radio waves. It should be noted that the input and output means of the mobile communication device 1 are not limited to those described above. For example, the mobile communication device 1 may be arranged so as to include only a numeric keypad 4 as input means.

Further, the functions of the mobile communication device 1 are not limited to the telephone, mail, and camera functions described above. For example, the mobile communication device 1 may further have other functions such as a television function of receiving a radio wave from a television station and displaying a television program, a calendar display function of displaying a calendar, a calculator function of performing calculations, and a network communication function of accessing another device over a network.

In order to make it possible to easily use the functions (e.g., telephone, mail, and camera functions) of the mobile communication device 1, the mobile communication device 1 is provided with a menu screen for giving instructions to activate the functions.

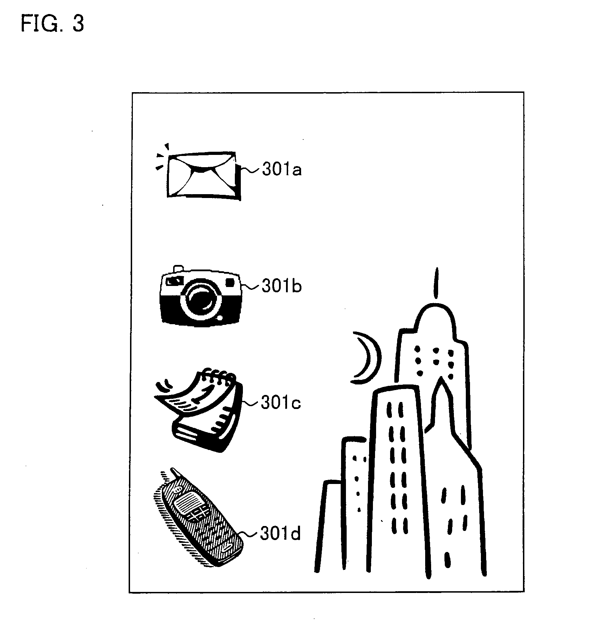

As shown in Fig. 3, for example, the menu screen uses icons 301a to 301d to visually express functions that can be executed in the mobile communication device 1. Moreover, the mobile communication device 1 is arranged so as to be able to start, by selecting a desired icon 301 from among the icons 301a to 301d thus visually expressed, a function corresponding to the icon 301 thus selected.

For example, the icon 301a, which is indicated as an image of a letter in Fig. 3, indicates the activation of the mail function. The icon 301b, which is indicated as an image of a camera, indicates the activation of the camera function. The icon 301c, which is indicated as an image of a block calendar, indicates a calendar display. Further, the icon 301d, which is indicated as an image of a mobile phone, indicates the activation of the telephone function.

It should be noted that, in the present embodiment, the icons 301a to 301d will be referred to simply as "icon 301" in cases where the icons 301a to 301d do not particularly need to be separately displayed.

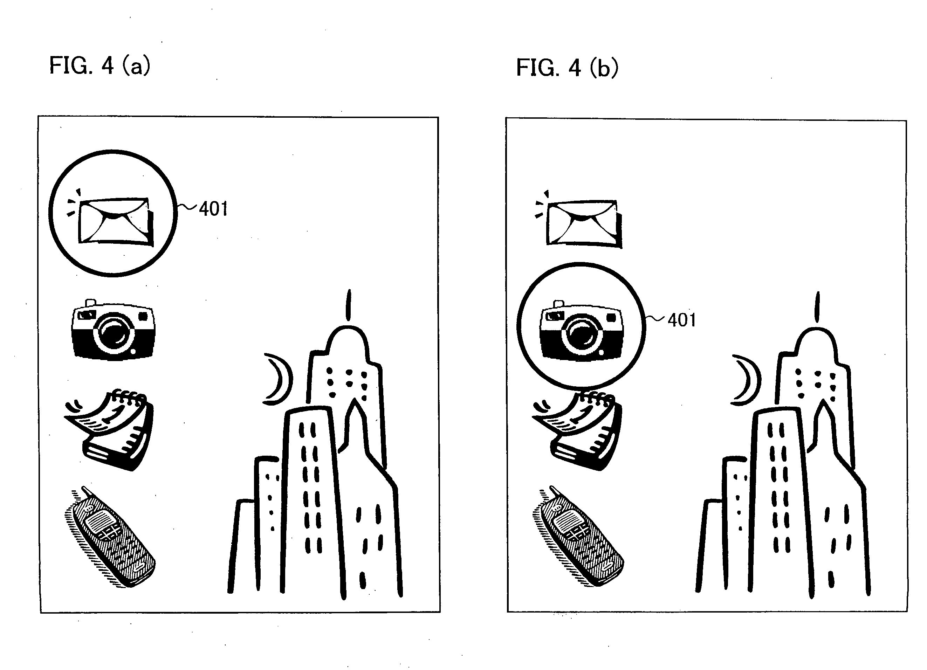

The menu screen of Fig. 3 allows the user to select a desired icon 301 by operating the arrow key 3, the numeric keypad 4, the decision key 9, or the return key 10 of the mobile communication device 1. Further, in order to specify the icon 301 thus selected, the mobile communication device 1 is set so as to display, as a selection-indicating image 401, an image of a circle drawn around the icon 301 as shown in Figs. 4(a) and 4(b). Moreover, the user can change the display position of the selection-indicating image 401 by operating the arrow key 3, the numeric keypad 4, the decision key 9, or the return key 10. Fig. 4(a), showing an embodiment of the present invention, shows an example of a display that specifies a selected icon on the menu screen. Fig. 4(b), showing an embodiment of the present invention, shows an example of a display that specifies a selected icon on the menu screen.

Thus, the mobile communication device 1 can graphically show a function that can be executed in the mobile communication device 1. This allows a user of the mobile communication device 1 to intuitively grasp what function to activate or deactivate.

(Arrangement of the Mobile Communication Device)

An arrangement of the mobile communication device 1 according to the present embodiment that realizes a display of the menu screen will be described below with reference to Fig. 1. Fig. 1, showing an embodiment of the present invention, is a block diagram showing a main part of the mobile communication device 1.

As shown in Fig. 1, the mobile communication device 1 according to the present embodiment includes, in addition to the display section 2, the arrow key 3, the numeric keypad 4, the decision key 9, the return key 10, the imaging section 5, the speaker 6, the microphone 7, and the antenna 8, a main control section 10 for executing various processes of the mobile communication device 1, an information storage section (memory device) 20 in which to store scenario data 21 ..., icon data groups 22 ... (identification data), table information 23, and selection-indicating image data 25, and a decision state transition information storage section (decision state transition information storage device) 26 in which to record decision state transition information 27.

The main control section 10 includes, as functional blocks, an input section 11, a scenario data acquisition section 12, an icon data acquisition section 13, a display data generating section (generating means) 14, a display control section (display control means) 15, a function execution control section 16, a table information changing section (changing means) 17, a transition state recording section (recording means) 28, and a change instruction section (instructing means) 29. It should be noted that in cases where the main control section 10 is realized, for example, by a CPU, each of the functional blocks can be realized when the CPU reads out, into a RAM, a program stored in a ROM (not shown) and executes the program.

The input section 11 receives input information inputted, for example, via the arrow key 3, the numeric keypad 4, the decision key 9, or the return key 10. The input section 11 transmits the received input information to the display data generating section 14. It should be noted that a combination of the input section 11 and the arrow key 3, the numeric keypad 4, the decision key 9, or the return key 10 realizes input means.

The scenario data acquisition section 12 reads out, in accordance with an instruction given from the display data generating section 14 or the change instruction section 29 described below, a predetermined piece of scenario data 21 from among the scenario data 21 ... stored in the information storage section 20. Then, the scenario data acquisition section 12 analyzes the scenario data 21 thus read out, thereby acquiring, for example, information for prescribing the location or display style of each icon 301 in the display section 2.

It should be noted that the scenario data 21 is information containing information for prescribing a display of a piece of icon data 24 on a display area and information for prescribing operation of the mobile communication device 1 in accordance with the decision state transition information 27. The scenario data 21 will be described below in detail.

The icon data acquisition section 13 reads out, in accordance with an instruction given from the display data generating section 14 described below, a predetermined icon data group 22 from among the icon data groups 22 ... stored in the information storage section 20. Then, the icon data acquisition section 13 analyzes information indicative of those functions of the mobile communication device 1 which correspond to the respective pieces of icon data 24 ... constituting the icon data group 22 thus read out.

Further, the icon data acquisition section 13 reads out, in accordance with an instruction given from the display data generating section 14 described below, a predetermined piece of selection-indicating image data 25 from among the selection-indicating image data 25 ... stored in the information storage section 20. The "selection-indicating image data 25" here means image data for visually specifying an icon displayed in accordance with icon data 24 selected from among the icon data group 22.

It should be noted that the icon data 24 is image data indicative of an icon 301 to be displayed in the display area of the display section 2. The icon data 24 contains, in addition to the image data indicative of the icon 301, information indicative of a function of the mobile communication device 1 which corresponds to the icon 301. The icon data 24 will be described below in detail.

The display data generating section 14 generates display data (display control information) in accordance with an instruction given from the input section 11. That is, in accordance with the input information received from the input section 11, the display data generating section 14 instructs the scenario data acquisition section 12 to acquire the scenario data 21 from the information storage section 20 and instructs the icon data acquisition section 13 to acquire a predetermined icon data group 22 and the selection-indicating image data 25 from the information storage section 20.

Then, based on the scenario data 21 acquired by the scenario data acquisition section 12 in accordance with the instruction, the display data generating section 14 determines the display position and display style of each piece of icon data 24 acquired by the icon data acquisition section 13 and generates display data. Furthermore, based on the scenario data 21, the display data generating section 14 adds, to the display data, information indicative of the display position and display style of the selection-indicating image data 25.

Then, the display data generating section 14 sends, to the display control section 15, the display data thus generated, and instructs the display control section 15 to perform a display in accordance with the display data. It should be noted that the display data generating section 14 is arranged so as to specify, with reference to the table information 23, respective combinations of icon data 24 whose display is prescribed by the scenario data 21.

Further, in cases where the display data generating section 14 receives, via the input section 11, information that gives an instruction to execute a function specified by selected icon data 24, the display data generating section 14 instructs the function execution control section 16 to activate the function associated with the selected icon data 24.

Further, in cases where the display data generating section 14 receives input information from the user via the input section 11, the display data generating section 14 notifies the change instruction section 29 of the input information thus received. Then, in cases where the display data generating section 14 receives, from the change instruction section 29, an instruction related to a change in display state, the display data generating section 14 generates display data corresponding to the instruction. Further, the display data generating section 14 notifies the transition state recording section 28 of the display data changed in accordance with the input information received from the user.

The display control section 15 performs display control in accordance with an instruction given from the display data generating section 14 so that the display section 2 displays a menu screen in accordance with the display data generated by the display data generating section 14.

The function execution control section 16 activates, in accordance with an instruction given from the display data generating section 14, a function corresponding to an icon 301 selected by the user.

The table information changing section 17 changes the table information 23 in accordance with a table information change instruction received from the input section 11.

Specifically, in cases where the change instruction indicates a shift to another piece of table information 23, the table information changing section 17 changes, to another piece of table information 23, the table information 23 to which the display data generating section 14 is currently referring in generating display data.

Alternatively, in cases where the change instruction indicates a change in information of the table information 23 to which the display data generating section 14 is currently referring, the table information changing section 17 makes a change in information of the table information 23 in accordance with the change instruction. The "information of the table information 23" here means information indicative of correspondence between the scenario data 21 and the icon data 24.

Further, the transition state recording section 28 stores, as the decision state transition information 27 in the decision state transition information storage section 26, information related to a display state of an icon 301 or the like that is displayed by the display section 2 at the time of reception of a user's instruction such as an activation instruction that is given by pressing the decision key 9 or an activation instruction that is given in a display state, immediately preceding the current display state, which is indicated by pressing the return key 10.

The mobile communication device 1 according to the present embodiment is arranged such that when the display data generating section 14 receives input information from the user, the display data generating section 14 notifies the transition state recording section 28 of display data indicative of a display state corresponding to the input information. As such, the transition state recording section 28 receives display data from the display data generating section 14 every time input information inputted from the user causes a change in display data, and stores, as the decision state transition information 27 in the decision state transition information storage section 26, a history of the display data thus received. That is, the decision state transition information 27 serves as information indicative of a transition between changes in display state in the display section 2.

It should be noted that the mobile communication device 1 according to the present embodiment may be arranged such that the transition state recording section 28 (recording means) stores all the display states of the identification data or stores the most recent history or a history starting from a specific display state that can be restored. The "specific state that can be restored" here means a display state in which the states of all objects are uniquely predetermined.

Upon receiving input information from the user via the display data generating section 14, the change instruction section 29 refers to the scenario data 21 and the decision state transition information 27 recorded in the decision state transition information storage section 26, thereby judging whether there is a change in display data. In cases where the change instruction section 29 judges that there is change in display data, the change instruction section 29 transmits a change instruction to the display data generating section 14.

The following describes various types of information to be stored in the information storage section 20 and the decision state transition information storage section 26 of the mobile communication device 1 according to the present embodiment. Each of the information storage section 20 and the decision state transition information storage section 26 is a readable and writable recording medium, and can be realized, for example, by a hard disk. Further, in Fig. 1, the mobile communication device 1 according to the present embodiment is arranged so as to separately include the information storage section 20 and the decision state transition information storage section 26. However, the information storage section 20 and the decision state transition information storage section 26 may be realized by a physically single storage device.

First, the information to be stored in the information storage section 20 will be described.

Each of the icon data groups 22 is an image data group for displaying an icon group (icons 301a to 301d) in the display area of the display section 2. The icon data group 22 is constituted by pieces of icon data 24 ... for displaying a combination of icons to be displayed together on a menu screen (i.e., respective combinations of the icons 301a to 301d).

Further, the icon data 24 contains, in addition to image data for displaying an icon 301, information indicative of that function of the mobile communication device 1 which corresponds to the icon 301. The "information indicative of that function" may be information (ID) for identifying, for example, an application which executes the function, or may be a character string, such as a URI, which can be uniquely specified. In the case of an application which executes a process by using a predetermined parameter as an argument, the icon data 24 may contain, in addition to the information indicative of that function, information indicative of the parameter for use in execution of the process.

It should be noted that each of the pieces of icon data 24 may be constituted by rater or vector image data. However, in cases where an icon 301 is scaled up or down for display in accordance with the content of scenario data 21 described below, the vector image data is more suitable in that high image quality can be maintained.

Further, the icon data may be an image containing an animation as an SVG (scalable vector graphics) file, which is a type of vector format. The icon data may be animated, for example, in accordance with whether or not the icon data is in a selection state. Further, there may be an arrangement in which to display different animations respectively in accordance with different cases such as a case where the icon data has just been put in a selection state, a case where the icon data has just been put out of a selection state (i.e., has just shifted to a non-selection state), and a case where an execution key (decision key 9) has just been pressed while the icon data is in a selection state.

For example, in the case of such an SVG image as described above, if plural types of animations are assigned ID numbers, the animations can be started by designating the ID numbers, respectively. For this reason, by assigning in advance IDs to animations corresponding to difference cases and designating the IDs, the animations can be executed in accordance with the cases, respectively.

The selection-indicating image data 25 serves as data for displaying the selection-indicating image 401.

The scenario data 21 is information containing information for prescribing a display of the icon data 24 on the display area and information for prescribing operation of the mobile communication device 1 in accordance with the decision state transition information 27. It should be noted that the "information for prescribing a display" is display-related information containing the states of the size, color, brightness, and the like of a displayed icon, a displayed character string, or the like, the display position of the icon, the character string, or the like in the display area, a user-selected state of the displayed icon or the displayed character string.

Further, the "information for prescribing an operation" is information for prescribing such an operation of the mobile communication device 1 (information processing device) as causing the mobile communication device 1 (information processing device) to stop an animation currently displayed by the display section , to start the animation, or to activate another application.

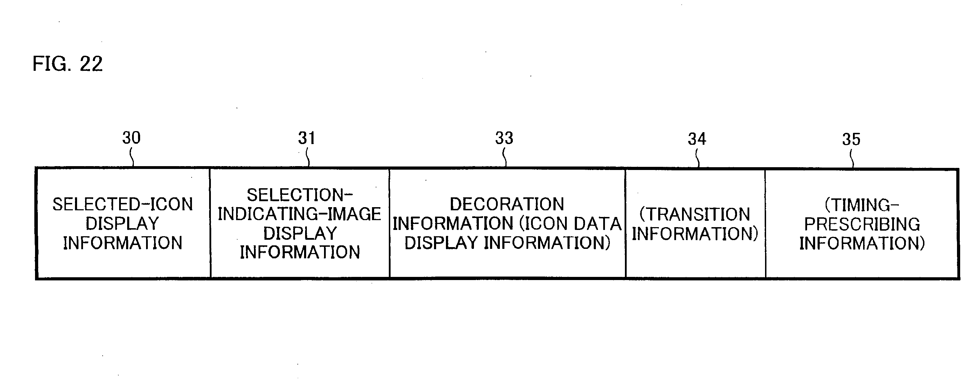

More specifically, the scenario data 21 has such a data structure as shown in Fig. 22, and contains selected-icon display information 30, selection-indicating-image display information 31, decoration data 33, transition information 34, and timing-prescribing information 35. It should be noted that Fig. 22 shows an example of a data structure of the scenario data 21.

The selected-icon display information 30 serves as information for prescribing the display form, such as the location in the display section 2 and/or display size of each icon 301 contained in each icon data group 22. For example, the selected-icon display information 30 prescribes positions, located on the display area, in which to display the icons 301a to 301d on the menu screen of Fig. 3, respectively. Further, the selected-icon display information 30 also contains information for prescribing the display form of a selected icon 301, i.e., for scaling up and display a selected icon 301.

As shown in Fig. 4(a) or 4(b), for example, the selection-indicating-image display information 31 prescribes the display form of a selection-indicating image 401 serving as a display for indicating a selected icon 301. For example, the selection-indicating-image display information 31 prescribes a position, located on the display area, in which the selection-indicating image 401 can be displayed on the menu screen.

The decoration information 33 serves as data for prescribing the display style of an image, such as a background image or a frame other than an icon 301 or a selection-indicating image 401, which is not to be selected by a user. The display form of the data is changed or animated by the after-mentioned timing-prescribing information 35 in accordance with predetermined conditions.

The transition information 34 serves as information for prescribing a destination of a change in display position of the selection-indicating image 401 on the display area, e.g., a direction in which the selection-indicating image 401 moves in accordance with an input from a user.

That is, the transition information 34 serves as information for prescribing a state of movement of the selection-indicating image 401, e.g., how the selection-indicating image 401 moves on the display area in accordance with an input from a user. Furthermore, the transition information 34 contains information for prescribing, for example, a state of movement of the display position of a figure or the like displayed in the mobile communication device 1.

Further, the transition information 34 is associated with such information as to be able to determine the start or end of an animation, the display form of a selected figure or icon, an application to be activated, and the like.

For example, the mobile communication device 1 according to the present embodiment can be arranged such that, as described above, an executable animation is assigned an ID number and the animation can be started by designating the ID number. In the case of such an arrangement, the scenario data 21 has the transition information 34 serving as information indicative of correspondence between an ID number of an animation to be executed and information indicative of a display state transition (e.g., information for prescribing a state of movement of the selection-indicating image 401 or information for prescribing a state of movement of the display position of a figure or the like).

The timing-prescribing information 35 serves as information for prescribing a timing of change in display position of the selection-indicating image 401 on the display area. It should be noted that the selected-icon display information 30, the transition information 34, and the timing-prescribing information 35 will be described below in detail.

In the present embodiment, the scenario data 21 is arranged so as to contain the selection-indicating-image display information 31; however, the selection-indicating-image display information 31 is not a must. For example, in the case of such an arrangement that a display of an icon 301 varies depending on whether or not icon data is in a selection state, or that an icon 301 is displayed as an animation, a selection state of the icon 301 can be indicated even without the selection-indicating image 401.

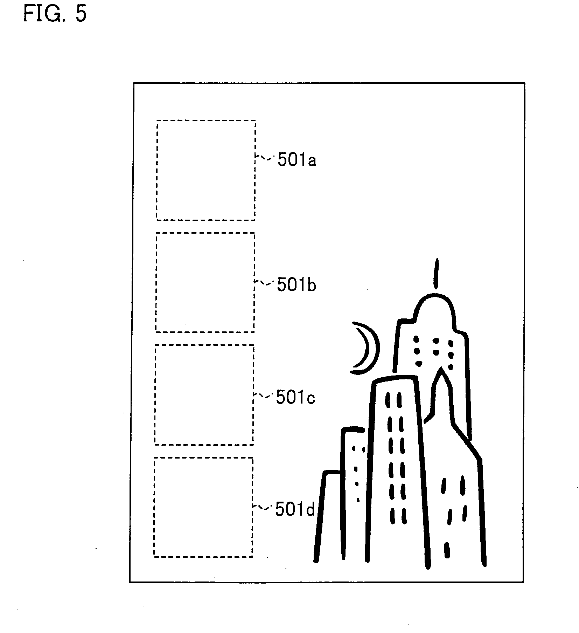

When it is assumed here that only the scenario data 21 of the information for displaying the menu screen of Fig. 3 is displayed, the scenario data 21 prescribes, as shown in Fig. 5, what icon 301 is located in a predetermined position on the display area, for example. Fig. 5 shows an example of a case where the mobile communication device 1 of the present embodiment hypothetically displays only the scenario data 21.

That is, in Fig. 5, the dotted frames 501a to 501d, each of which is an area surrounded by a dotted line, indicates the positions in which to locate the icons 301a to 301d of Fig. 3, respectively. That is, in the present embodiment, the scenario data 21 prescribes that, in an initial state of the menu screen, the icons 301a to 301d are displayed in this order from the top in the vertical axial direction of the display area of the display section 2.

It should be noted that the icons 301a to 301d may be prescribed so as to be displayed within areas of designated position, designated width, and designated height, i.e., within areas of the dotted frames 501a to 501d, respectively. Alternatively, the icons 301a to 301d may be prescribed so as to be scaled up for display at a predetermined scaling-up rate by using, as a standard, the areas indicated by the dotted frames 501a to 501d. In cases where the icons 301 are thus scaled up, the icons 301a to 301d are displayed in such enlarged size so as to protrude from the areas indicated by the dotted frames 501a to 501d.

Further, although the display positions in which to display the icons 301a to 301d are indicated above by the dotted frames 501a to 501d, respectively, these display frames 501a to 501d may be displayed together with the icons 301, or may not be displayed.

The table information 23 serves as information indicative of correspondence between the scenario data 21 and the icon data 24. Although described below, the mobile communication device 1 according to the present embodiment is arranged such that the display data generating section 14 can specify a combination of the scenario data 21 and the icon data 24 with reference to the table information 23.

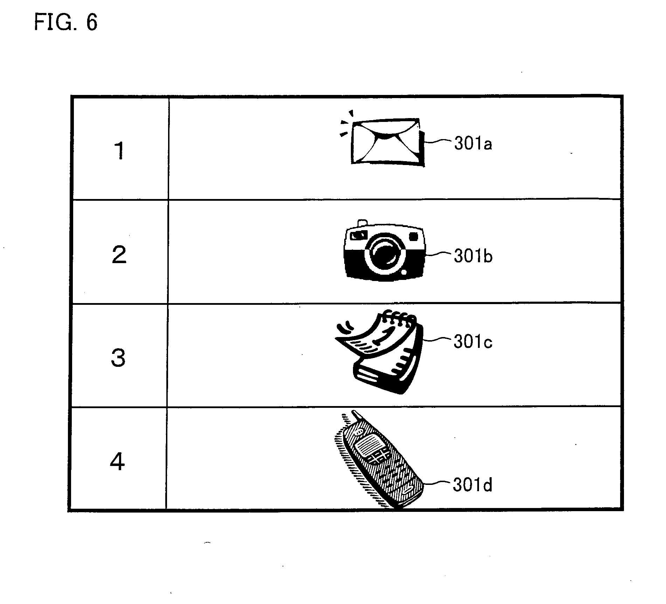

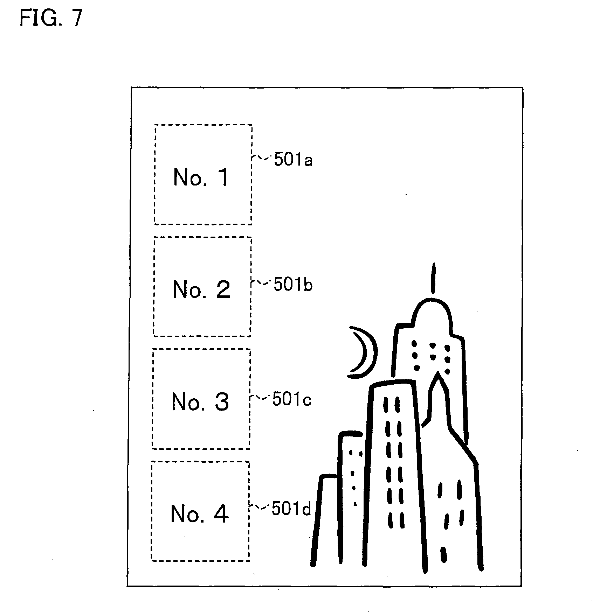

For example, as shown in Fig. 6, the table information 23 keeps a record of correspondence between table numbers (No. 1 to No. 4) and image data (icon data 24) indicative of the icons 301a to 301d respectively corresponding to the table numbers. Meanwhile, the scenario data 21 serves as a description of correspondence between the positions 501a to 501d of the icons 301a to 301d on the display area of the display section 2 as shown in Fig. 7 and those table numbers (No. 1 to No. 4) of the table information 23 which correspond to the positions 501a to 501d, respectively.

The table numbers of the table information 23 are associated with information for specifying the storage locations of icon data 24, stored in the information storage section 20, which indicate the icons 301 and 301d, respectively. Examples of the information for specifying the storage locations include a file name of icon data 24 and a memory address in a storage area of the information storage section 20. In cases where the mobile communication device 1 according to the present embodiment acquires icon data 24 from outside, the information for specifying the storage location of the icon data 24 may be, for example, a URI indicative of the position of the icon data 24 on the Net.

It should be noted that the mobile communication device 1 according to the present embodiment has plural types of icon data groups 22 and that the scenario data 21 further includes information for specifying an icon data group 22. Further, since there exist plural types of icon data groups 22, the information table 23 of Fig. 6 is prepared to the number of icon data groups 22.

In cases where the information storage section 20 has plural types of icon data groups 22 stored therein, it is possible to collectively change information related to the icons 301a to 301d to be displayed in the display area of the display section 2.

Further, in cases where the display positions of the icons 301a to 301d are changed without changing pictures to be used as the icons 301a to 301d, the mobile communication device 1 according to the present embodiment can realize such a change in the following manner.

That is, the mobile communication device 1 can realize such a change by recording, as table information 23 to be stored in the information storage section 20, information indicative of correspondence between new positions 501a to 501d in which to locate icons and the icons 301a to 301d to be located in the positions 501a to 501d, respectively.

The following describes the decision state transition information 27 stored in the decision state transition information storage section 26. As described above, the decision state transition information 27 serves as information indicative of a display state transition corresponding to each operation instruction given from a user.

As described above, the mobile communication device 1 according to the present embodiment includes the display data generating section 14, which can generate display data in accordance with data separated into an icon data group 22 and scenario data 21. Further, the mobile communication device 1 includes the display control section 15, which can control the display section 2, in accordance with the display data generated by the display data generating section 14, so that the display section 2 displays the icon data group 22 in a specific display style.

For this reason, the mobile communication device 1 can change the location of the icon data group 22 to another location, for example, by changing only the scenario data 21 to another piece of scenario data 21. Further, for example, by changing the icon data group 22 to another icon data group 22, each icon 301 can be changed in design or the like to another icon 301.

Thus, in cases where the location of an icon 301 or the like is changed, it is only necessary to change only the scenario data 21. Further, in cases where the design of an icon or the like is changed, it is only necessary to change the icon data group 22 to another icon data group 22.

For this reason, the mobile communication device 1 can easily change the display style of identification data without the need of a process of changing a large program such as a UNIX window manager.

Further, the mobile communication device 1 includes the information storage section 20, in which icon data groups 22 and scenario data 21 can be stored. For this reason, even in cases where the mobile communication device 1 cannot communicate with an external communication device and therefore cannot acquire icon data (identification data) 24 and/or scenario data 21, the mobile communication device 1 can combine icon data groups 22 and scenario data 21 already stored in the information storage section 20, thereby generating display data for realizing a plurality of display patterns.

Further, the mobile communication device 1 stores the table information 23 in the information storage section 20. For this reason, the display data generating section 14 can easily specify a combination of scenario data 21 and an icon data group 22 with reference to the table information 23.

Therefore, the mobile communication device 1 can easily display an icon 301 in a specific display style.

Further, as described above, the mobile communication device 1 according to the present embodiment is not arranged so as to acquire and use scenario data 21 and icon data 24 combined, for example, in an external device, but is arranged so as to combine scenario data 21 and icon data 24 within the mobile communication device 1 itself. This enables a user to change operational feelings and icons in various ways by freely changing combinations of scenario data 21 and icon data 24 without acquiring scenario data 21 and icon data 24, for example, by connecting to an external device. Furthermore, since it is not necessary to connect to an external device in changing operational feelings and icons, it is possible to responsively change operational feelings and icons regardless of the condition of communication with an external device.

Further, the mobile communication device 1 according to the present embodiment has the decision state transition information 27 stored in the decision state transition information storage section 26 and includes the change instruction section 29. Therefore, the mobile communication device 1 according to the present embodiment can control the display data generating section 14 so that the display data generating section 14 generates display data so that a display state is changed in accordance with a transition from the display state to another.

For example, in cases where the scenario data 21 contains information for changing the display design or the like of the icon data 24, the display data generating section 14 can be controlled during a transition from one display state to another so as to scale up or move (e.g., rotate) the icon in accordance with the past transitions between display states.

Further, in the decision state transition information storage section 26, a history of information indicative of display states is recorded as decision state transition information 27. Therefore, for example, even after a function based on an instruction given from a user has been executed, it is possible to return to a display indicative of a selection state in which an icon 301 was before the execution of the function.

That is, a display indicative of a selection state is not in an initial state after the execution of a function, so that another function can be selected in a state as of the time of the execution of the function. For example, in the case of a desire to execute a function that can be selected by adding a single operation to a function indicated by the currently selected icon 301, the number of operations that the user must perform in order to select the desired process can be reduced.

As described above, the mobile communication device 1 according to the present embodiment is arranged such that when a user inputs decision-indicating information at the time of a display of a state in which an icon 301 that the user wishes to execute is selected, a function specified by the icon 301 is executed. Moreover, the mobile communication device 1 is arranged such that at the completion of the execution of the function, the display state of the menu screen returns to a state in which the icon 301 specifying the function is in a selection state, i.e., to a selection state preceding the execution of the function.

Furthermore, as described above, the mobile communication device 1 according to the present embodiment can change a display state in accordance with a transition from the display state to another with reference to the decision state transition information 27, i.e., a history of information indicative of display states, and the scenario data 21.

That is, in cases where the mobile communication device 1 receives information indicative of an instruction to execute a function specified by a selected icon 301, the display data generating section 14 instructs the function execution control section 16 to execute the function specified by the currently selected icon 301 and notifies the change instruction section 29 of input information (an operation instruction) given from a user.

In accordance with the notification given from the display data generating section 14, the change instruction section 29 instructs the scenario data acquisition section 12 to acquire scenario data 21 and judges the presence or absence of a change in display state with reference to the scenario data 21 and the decision state transition information 27. Then, in cases where the change instruction section 29 judges that it is necessary to change a display state, for example, by activating and displaying an animation, the change instruction section 29 instructs the display data generating section 14 to change the display state.

Therefore, the mobile communication device 1 according to the present embodiment can control the display data generating section 14 so that the display data generating section 14 generates such display data that a display state corresponds to a transition from the display state to another.

Further, when the display data generating section 14 creates, in accordance with the instruction given from the change instruction section 29, such display data as to change a display state, the display data is transmitted to the display control section 15 and the transition state recording section 28. The transition state recording section 28 receives the display data from the display data generating section 14 and adds the display data to the decision state transition information storage section 26 as decision state transition information 27.

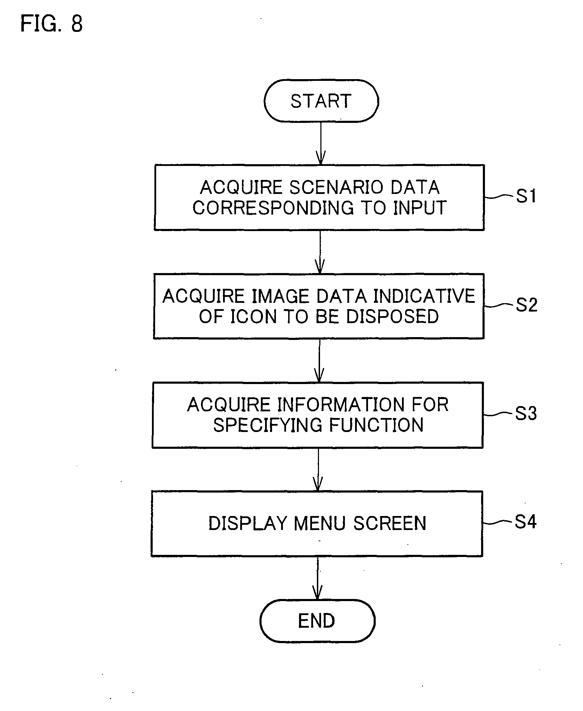

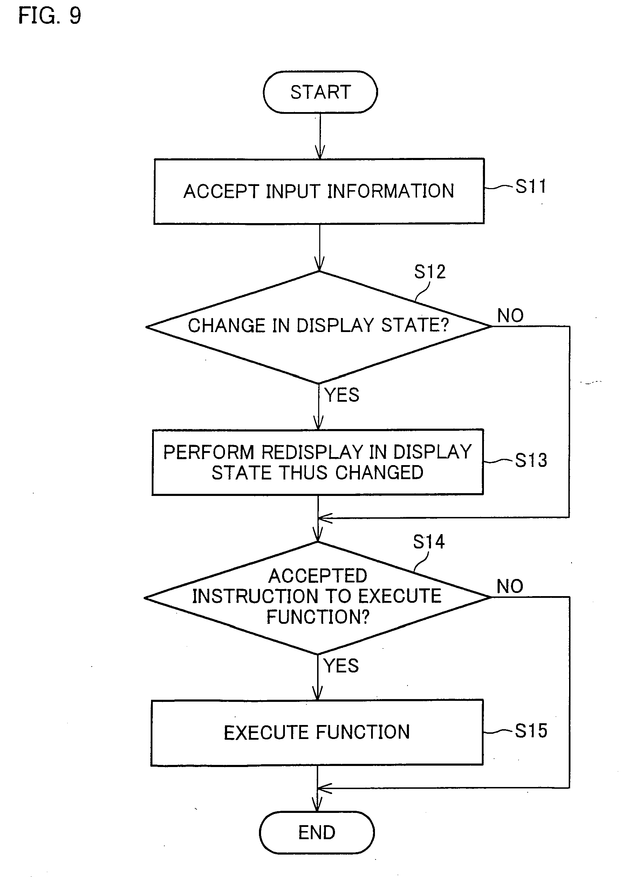

The following fully describes, with reference to Figs. 8 and 9, a process of displaying a menu screen and a selection process (icon-selecting process) to be performed in cases where a specific icon 301 is selected under a state in which the menu screen is displayed.

(Process of Displaying a Menu Screen)

First, the present embodiment presumes that a display screen of the display section 2 is changed from a standby screen to a menu screen by a user's operating the arrow key 3, the numeric keypad 4, the decision key 9, or the return key 10.

When the input section 11 receives input information that gives an instruction to change the display to a menu screen, the input section 11 transmits the received input information to the display data generating section 14.

Meanwhile, the display data generating section 14 instructs the scenario data acquisition section 12 to acquire scenario data 21 and instructs the icon data acquisition section 13 to acquire an icon data group 22. It should be noted that a combination of scenario data 21 and an icon data group 22 to be acquired by default is predetermined. Although not shown, information indicative of the default combination is stored in the information storage section 20.

In accordance with the instruction given from the display data generating section 14, the scenario data acquisition section 12 acquires scenario data 21 and sends it to the display data generating section 14. Thus, the mobile communication device 1 according to the present embodiment can acquire scenario data 21 corresponding to an input from the user (Step S1, hereinafter referred to as "S1").

Further, in accordance with the instruction given from the display data generating section 14, the icon data acquisition section 13 acquires an icon data group 22 and sends it to the display data generating section 14. Thus, the mobile communication device 1 according to the present embodiment is arranged such that the display data generating section 14 acquires an icon data group 22, which corresponds to an input from the user, of icon data 24 containing image data indicative of an icon 301 (S2).

Further, when the display data generating section 14 acquires the icon data group 22, the display data generating section 14 acquires information indicative of those functions of the mobile communication device 1 which correspond to the respective pieces of icon data 24 constituting the icon data group 22 (S3).

Next, in accordance with the scenario data 21 thus acquired and the icon data group 22 thus acquired, the display data generating section 14 generates display information for displaying the default menu screen. Then, the display data generating section 14 sends, to the display control section 15, the display information thus generated.

In accordance with the display information received from the display data generating section 14, the display control section 15 controls the display section 2 so that the display section 2 displays the menu screen (S4).

Thus, the mobile communication device 1 according to the present embodiment can display the menu screen by taking Steps S1 to S4 described above. It should be noted that the information to be acquired by the display data generating section 14 in Step S3 may be information directly indicative of a function of the mobile communication device 1 which corresponds to each piece of icon data 24 constituting the icon data group 22 thus acquired or may be an identifier indicative of a number or symbol associated with the function.

Although the foregoing has described a case where a user's operation triggers a change in display from the standby screen to the menu screen, the trigger for the display of the menu screen is not limited to this. For example, there may be such an arrangement that the menu screen is displayed when a main power supply of the mobile communication device 1 is turned ON. In the case of such an arrangement, information indicating that the main power supply is ON serves as input information for giving an instruction to display the menu screen.

It should be noted that the process steps S1 to S3 realize a step of generating display control information. Moreover, the process step S4 realizes a step of performing display control on the display section 2.

The following describes a process (process of selecting an icon 301) of, under a state in which the menu screen is displayed as described above, selecting a specific icon 301 from among a group of icons displayed in accordance with an icon data group 22.

(Icon-selecting Process)

First, the input section 11 receives input information from the arrow key 3, the numeric keypad 4, the decision key 9, or the return key 10 (S11). Then, the input section 11 transmits, to the display data generating section 14, the input information thus received. In accordance with the input information received from the input section 11, the display data generating section 14 determines, with reference to the scenario data 21 that has been acquired, whether the input information causes a change in display state of the menu screen (S12).

That is, when the display data generating section 14 receives the input information from the user via the input section 11, the display data generating section 14 notifies the change instruction section 29 of the input information thus received. Upon receiving the input information from the display data generating section 14, the change instruction section 29 judges, with reference to the scenario data 21 and the decision state transition information 27, whether or not it is necessary to change the display data. Then, in cases where it is necessary to change the display data, the change instruction section 29 notifies the display data generating section 14 of an instruction to change the display data. Thus, the mobile communication device 1 according to the present embodiment determines the presence or absence of a change in display state.

It should be noted here that in cases where it is determined that there is a change in display state of the menu screen ("YES" in S12), the menu screen is redisplayed in a new display state thus obtained through the change (S13). That is, the display data generating section 14 changes the display data in accordance with the change instruction given from the change instruction section 29, transmits, to the display control section 15, the display data thus obtained after the change, and instructs the display control section 15 to perform a redisplay. Further, the display data generating section 14 transmits, to the transition state recording section 28, the display data thus obtained after the change, and instructs the transition state recording section 28 to record it as decision state transition information 27.

Then, when input information indicative of an instruction to execute a function corresponding to a selected and displayed icon 301 is received by the input section 11 from the decision key 9 ("YES" in S 14) after the redisplay or in the case of no change in default display state ("NO" in S12), the function associated with the icon 301 is executed (S15). On the other hand, in cases where the input information indicative of the instruction to execute the function is not received ("NO" in S14), the process is terminated.

That is, when the input section 11 receives, from the decision key 9, the input information indicative of the instruction to execute the function, the input section 11 sends the input information to the display data generating section 14. In accordance with the input information thus received, the display data generating section 14 transmits, to the function execution control section 16, information for specifying a function corresponding to an icon 301 currently displayed in a selection state. The function execution control section 16 performs control so that the function based on the function-specifying information received from the display data generating section 14 is executed.

In this way, by changing the display of the menu screen, the mobile communication device 1 according to the present embodiment can select a specific icon 301 from among a group of icons displayed on the menu screen. Further, the mobile communication device 1 according to the present embodiment can execute, in accordance with input information received from the decision key 9, a function corresponding to an icon 301 displayed in a selection state.

(Process of Changing Combinations of Icon Data Groups and Scenario Data)

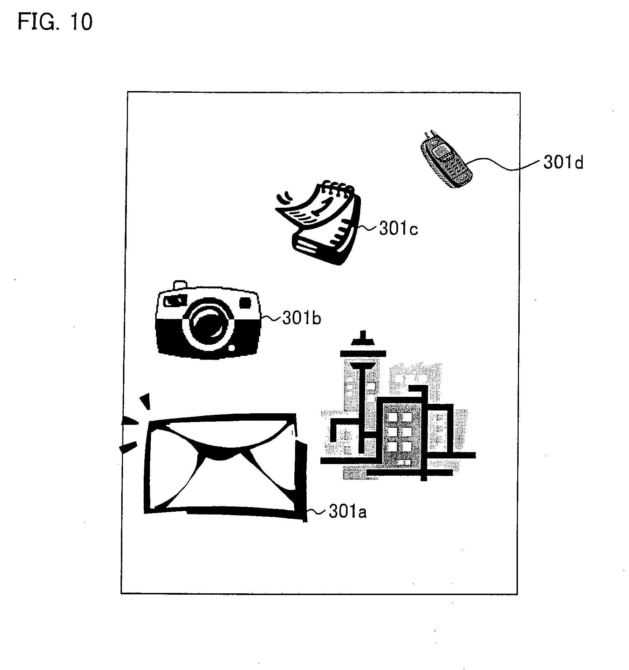

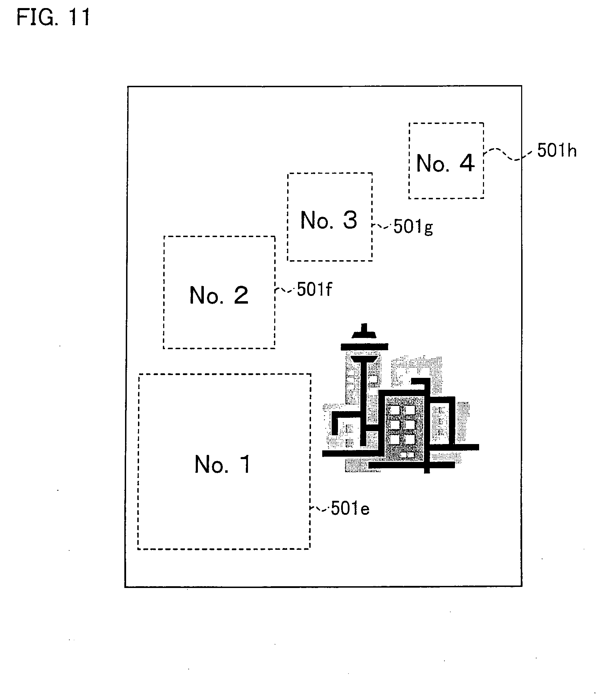

Incidentally, the mobile communication device according to the present embodiment is arranged so as to be able to easily change combinations of icon data groups 22 ... and scenario data 21 ... in accordance with input information received from a user via the input section 11. The following more fully describes, with reference to Figs. 10 and 11, a case where combinations of icon data groups 22 and scenario data 21 are changed. However, for convenience of explanation, the following does not indicate anything about a display of the selection-indicating image 401.

For example, suppose that in cases where only the scenario data 21 is changed on the menu screen of Fig. 3, the display of the menu screen is changed as shown in Fig. 10. That is, the menu screen of Fig. 3 is displayed in such settings that the icons 301a to 301d are disposed in a longitudinal direction in the display area of the display section 2. Meanwhile, on the menu screen of Fig. 10, the icons 301a to 301d are disposed in the display area so as to draw an arc that extends diagonally from the lower left corner of the display area to the upper right corner. Further, on the menu screen of Fig. 10, the display size of an icon 301 is set to become smaller as it proceeds from the lower left corner to the upper right corner.

Thus, by changing the scenario data 21 to another piece of scenario data 21, the respective display positions of the icons 301a to 301d on the menu screen can be changed. Further, Fig. 11 shows the case of a hypothetical display of only scenario data 21 prescribing the locations of the icons 301a to 301d so that the icons 301a to 301d are in their respective display positions as shown in Fig. 10. That is, those portions of the display area in which the icons 301a to 301d are located and the display sizes of the icons 301a to 301d are prescribed by dotted frames 501e to 501h, respectively. Further, the dotted frames 501e to 501h contain pieces of information indicative of table numbers No. 1 to No. 4 for specifying the icons 301a to 301d to be located in the dotted frames 501e to 501h, respectively.

Thus, the mobile communication device 1 according to the present embodiment can reuse the same icon data group 22 and the same table information 23 while changing only the scenario data 21 to another piece of scenario data 21. That is, in the mobile communication device 1 according to the present embodiment, information necessary for displaying a menu screen is separated into scenario data 21 and an icon data group 22. For this reason, in the case of a change in such a display form of an icon 301 as the designs of icons 301 ... to be displayed, the locations of icons 301 ... to be displayed, or the display size of an icon 301 to be displayed, a combination of the separate scenario data 21 and icon data group 22 can be used without the need to prestore all data that correspond to possible patterns of display forms.

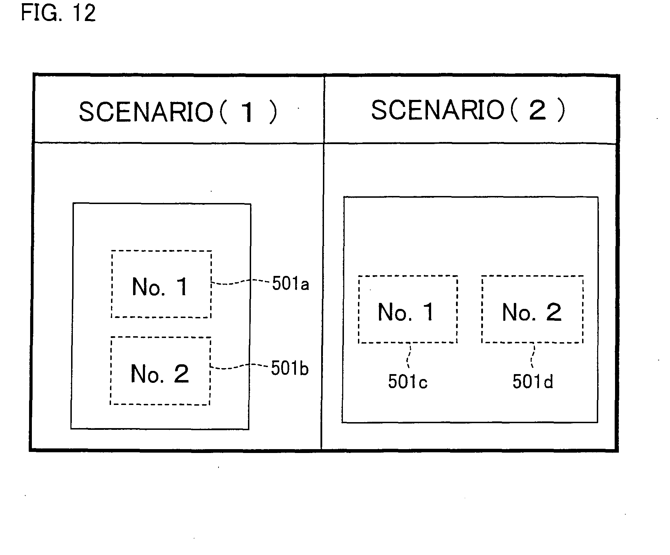

For example, suppose that two types of scenario, namely a scenario 1 and a scenario 2, are prepared as scenario data 21 ..., as shown in Fig. 12, in the mobile communication device 1 according to the present embodiment. In Fig. 12, a portion indicated by a dotted frame 501 is an area where icon data 24 is displayed, and a number written in the dotted frame 501 is a table number associated with an icon 301 to be displayed in the dotted frame.

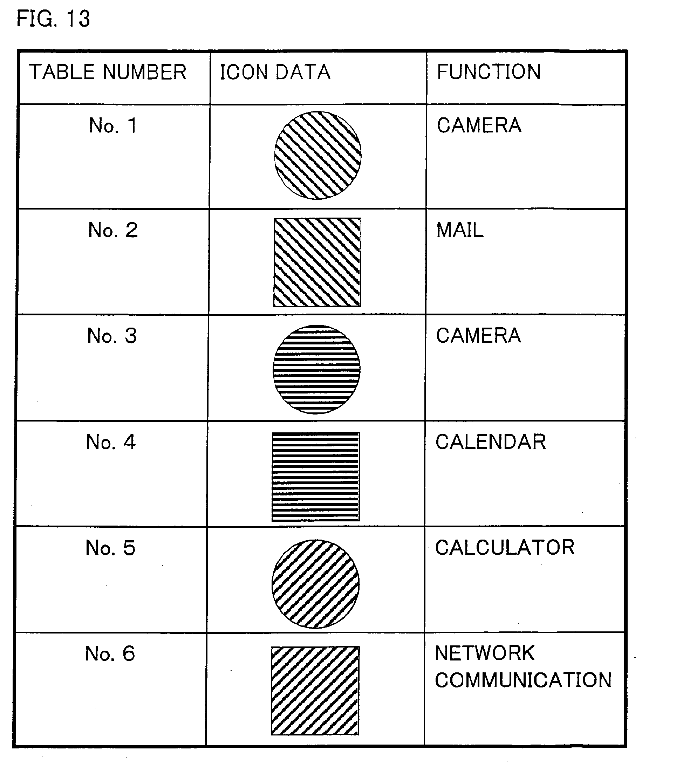

Further, suppose that six types of icon data 24 are prepared as shown in Fig. 13. Fig. 13, showing an example of the table information 23, shows display images of icons 301 to be displayed respectively in accordance with the six types of icon data 24, information related to functions respectively specified by the icons 301, and table numbers associated with the six types of icon data 24 and the functions.

In this case, by reading icon data 24 as shown in Fig. 13, information related to a function specified by the icon data 24 can be acquired. This makes it unnecessary that the table information 23 be table information also associated with function-related information. Instead, the table information 23 can be information constituted by a table number and a display image (image data) of an icon 301 associated with the table number.

In cases where the table information 23 is not associated with function-related information, the mobile communication device 1 is arranged so as to separately include the after-mentioned table information (second table information) so that the display data generating section 14 can specify, in accordance with icon data 24 acquired by the icon data acquisition section 13, a function corresponding to the icon data 24 thus acquired.

That is, the mobile communication device 1 further includes, as the second table information, a table indicative of correspondence between a display image (image data) and a function. Moreover, with reference to the second table information, the display date generating section 14 can specify a function in accordance with icon data 24 acquired by the icon data acquisition section 13.

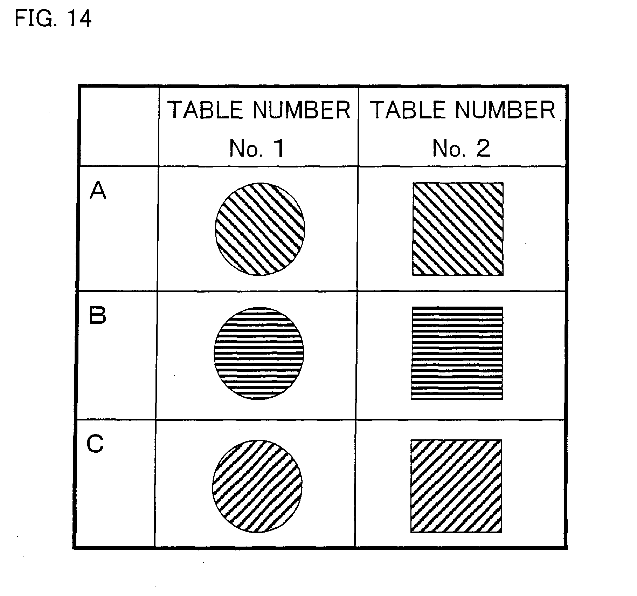

Each of the scenarios (1) and (2) of Fig. 12 prescribes two areas where icons 301 are displayed. In view of this, it is assumed that under each of the scenarios (1) and (2), a user can select, from three sets A, B, and C shown in Fig. 14, a single combination of icons 301 (icon data group 22) to be displayed in the two areas.

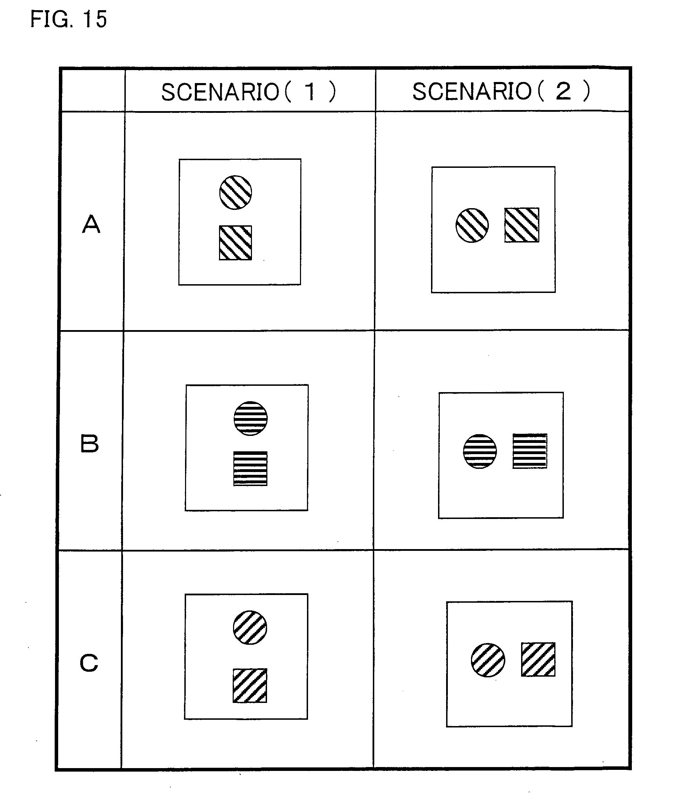

In cases where the scenarios (1) and (2) are thus prescribed, the mobile communication device 1 according to the present embodiment has two types (scenarios (1) and (2)) of scenario data 21 retained in the information storage section 20 and three types of combination of icon data 24 to be displayed in the display area. Thus, the mobile communication device 1 according to the present embodiment can realize at least six (2x3=6) types of display pattern as shown in Fig. 15.

Further, for example, in cases where it is assumed here that the data amount of a single piece of scenario data 21 is 1 KB and the data amount of a single piece of image data is 10 KB, the total amount of data to be stored in the information storage section 20 in the above embodiment takes on a value as shown in the following equation (1):

$$1 \; (KB) \times 2 + 10 \; (KB) \times 6 = 62 \; (KB) \cdots (1)$$

Meanwhile, in the case of preparation of pieces of data respectively corresponding to the patterns of display forms, i.e., data containing all information for associating scenario data 21, icon data 24, and a function specified by an icon 301 expressed by the icon data 24, the amount of data needed takes on a value as shown in the following equation (2):

$$(1 \; (KB) + 10 \; (KB) \times 2) \times 6 \; (types) = 126 \; (KB) \cdots (2)$$

Further, the foregoing has described a setting in which to switch among the sets A to C of icon data 24 whose display areas are prescribed by the scenario data 21. However, there may be a setting in which to freely select, from among the pieces of icon data 24 of Fig. 13, pieces of icon data 24 whose number is prescribed by the scenario data 21. In the case of such a setting, there are 15 patterns of selection of icon data 24 on the assumption that two identical pieces of icon data 24 are not selected from the six pieces of icon data 24 of Fig. 13.

That is, 30 types of display pattern can be realized in cases where icon data 24 can be freely selected by a user.

Thus, in the case of a setting in which 30 types of display pattern can be realized, the amount of data to be stored in the information storage section 20 as described above in the mobile communication device 1 according to the present embodiment remains 62 KB. On the other hand, in the case of an arrangement in which pieces of data respectively corresponding to the display patterns are prestored in the information storage section 20, the amount of data takes on a value as shown in the following equation (3):

$$(1 \; (KB) + 10 \; (KB) \times 2) \times 30 \; (types) = 630 \; (KB) \cdots (3)$$

As described above, the mobile communication device 1 according to the present embodiment is arranged such that the information storage section 20 contains information for displaying an icon 301, the information being separated into scenario data 21 and icon data 24. For this reason, as compared with the arrangement in which the pieces of data respectively corresponding to the patterns of display forms are prestored in the information storage section 20, the amount of data to be stored can be greatly reduced.

Especially, since the mobile communication device 1, such as a mobile phone, is being increasingly miniaturized, the mobile communication device 1 is restricted in the amount of data that can be stored in the information storage section 20. For this reason, it is especially important for the mobile communication device 1 according to the present embodiment to reduce the amount of data to be stored.

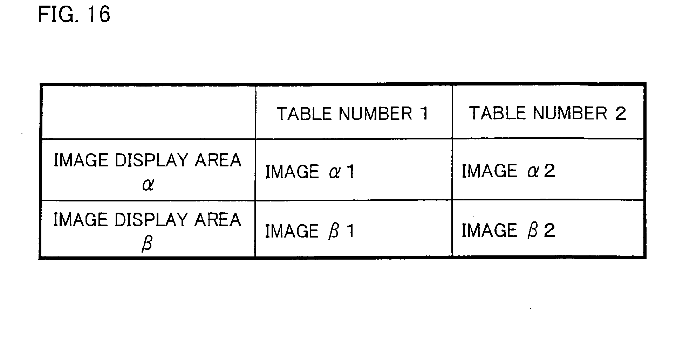

Incidentally, in the case of an arrangement in which icon data 24 and scenario data 21 are not stored separately, a change in display of the menu screen can be realized by preparing such a table as shown in Fig. 16.

That is, as shown in Fig. 16, a combination of pieces of icon data (images $\alpha 1$ and $\beta 1$) to be respectively displayed in image display areas $\alpha$ and $\beta$ and a combination of pieces of icon data (images $\alpha 2$ and $\beta 2$) to be respectively displayed in the image display areas $\alpha$ and $\beta$ are prepared as the table. Moreover, the table is arranged such that each of the combinations is assigned a table number and the combinations can be switched between by designating the table number. It should be noted that Fig. 16 shows an example of correspondence between a display area and icon data to be displayed in the display area.

However, such a table arrangement suffers from such a problem as described in the following.

That is, a mobile communication device arranged as described above requires, as data for displaying a menu screen, data containing information corresponding to scenario data 21 according to the present embodiment and image data (icon data) indicative of an icon. That is, the data for displaying the menu screen is required to contain information related to a function that can be executed in the mobile communication device.

Thus, in cases where the data for displaying the menu screen contains function-related information, it is impossible, unlike in the mobile communication device 1 according to the present embodiment, to freely change the display form of an icon 301 to be displayed by the display section 2. Especially, it is impossible, unlike in the mobile communication device 1, to freely combine an icon 301 to be displayed with a function to be specified by the icon 301.

Further, in the mobile communication device 1 according to the present embodiment, the data for displaying the menu screen is separated into scenario data 21 and icon data 24. Therefore, for example, the mobile communication device 1 according to the present embodiment can send only the scenario data 21 to another mobile communication device 1. This allows another mobile communication device to display an icon 301 in the same display state as does the mobile communication device 1 according to the present embodiment.

The mobile communication device 1 according to the present embodiment uses scenario data 21 to prescribe, in accordance with input information received from a user, a change in state between a selection state and a non-selection state of an icon 301. In cases where the icon 301 is in a selection state, the selection-indicating image 401 surrounds the selected icon 301 so as to indicate the selection state. However, this is not the only mode of expression for indicating whether an icon 301 is in a selection state or a non-selection state.

For example, there may be a setting in which to change the display state of an icon 301 is changed in the following manner in accordance with a state prescribed in accordance with scenario data 21 1 and/or input information received from a user.

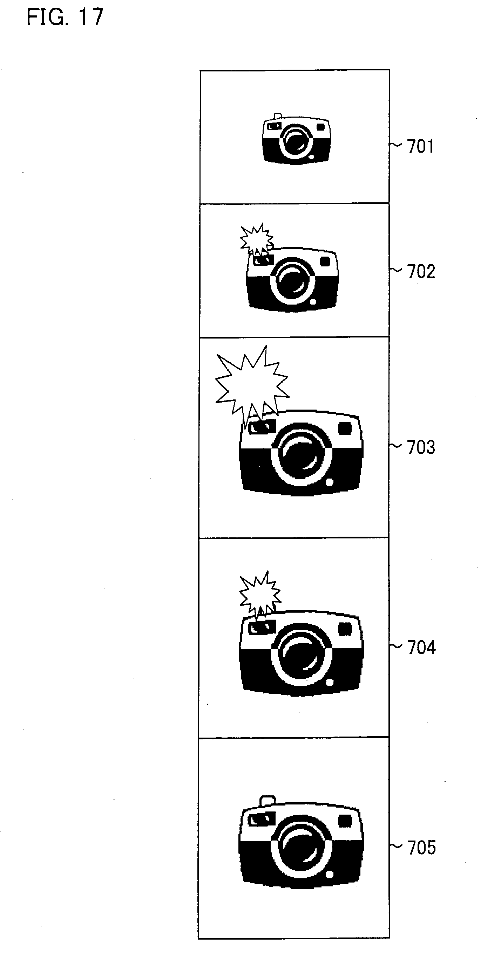

More specifically, for example, in cases where an icon 301 is in a non-selection state, the icon 301 is in such a display state as to be a still image 701 of a camera as shown in Fig. 17. Meanwhile, in cases where the icon 301 is put in a selection state in accordance with scenario data 21 and/or input information received from a user, the icon 301 is in such a display state that images 702 to 705 shown in Fig. 17 are displayed in sequence.

It should be noted that the selected icon 301 may be in such a display state that the images 702 to 705 shown in Fig. 17 are displayed at regular intervals or that the images are displayed at different intervals. Further, instead of displaying these still images in sequence, the selected icon 301 may be expressed by using an animation function such as SVG (scalable vector graphics) or by reproducing animated data.

In cases where the display state of an icon 301 is changed in accordance with a set state such as a selection state, a non-selection state, or a decision state, icon data involved in the way in which the icon 301 is displayed after the change is also contained in advance in each piece of icon data 24 constituting an icon data group 22. However, a single piece of icon data may contain information for realizing a plurality of display states such as a selection state, a non-selection state, and a decision state.

Furthermore, there may be a setting in which an icon 301, a background image, and/or a character that are/is to be displayed on the menu screen of the mobile communication device 1 are/is changed in accordance with whether or not the icon 301 is in a selection state. In the case of such a setting, the scenario data 21 contains information for prescribing, in accordance with whether or not the icon 301 is in a selection state, a combination of plural types of image data and each icon 301 constituting an icon group, a combination of plural types of background image data and the icon 301, and a combination of plural types of character data and the icon 301.

It should be noted that the mobile communication device 1 according to the present embodiment may be set so as to be able to change a function specified by each piece of icon data 24. Further, the icon data 24 may be associated with audio information. In this case, for example, the icon data 24 is associated with an application that performs reproduction of sound.

Further, each piece of icon data 24 constituting the icon data group 22 does not need to correspond exclusively to a single function of the mobile communication device 1, and may correspond to a plurality of functions. Alternatively, there may be a setting in which: in accordance with a change in state of an icon 301 between a selection state and a non-selection state as prescribed by scenario data 21 described below, the selection state corresponds to one function and the non-selection state corresponds to another function, so that the functions can be executed in accordance with the states of the icon 301, respectively. That is, in cases where an icon 301 displayed by the display section 2 can be shifted to a plurality of states in response to a user's input in accordance with scenario data 21, each piece of icon data 24 may contain such information that different functions (applications) can be executed in accordance with different states thus set.

As described above, the mobile communication device 1 according to the present embodiment uses the scenario data 21 to prescribe (i) a change in display state as to whether to put an icon 301 in a selection state or a non-selection state in accordance with input information received from a user and (ii) the display position of the selection-indicating image 401, which accompanies the change, on the display area.

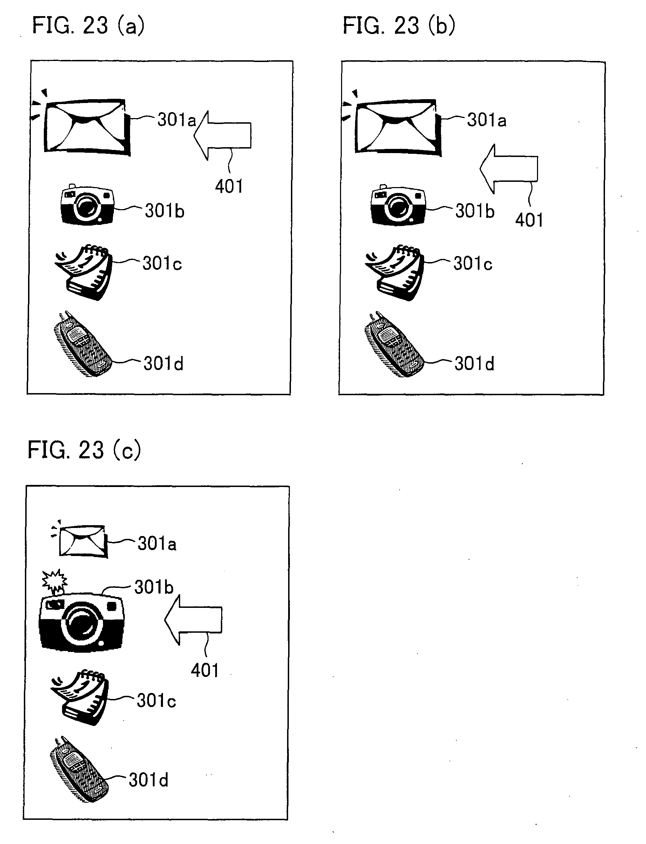

The following fully describes, with reference to Figs. 23 through 26, a process related to the change in display state prescribed by the scenario data. In order to more clearly describe a change in display state of the selection-indicating image 401, the following assumes that the selection-indicating image 401 is displayed as an arrow, as shown in Fig. 23, that specifies the selected icon 301, instead of being displayed so as to surround the selected icon 301. Fig. 23(a), showing the present embodiment, shows an example of the display state of the selection-indicating image 401. Fig. 23 (b), showing the present embodiment, shows an example of the display state of the selection-indicating image 401. Fig. 23(c), showing the present embodiment, shows an example of the display state of the selection-indicating image 401.

In order to perform display control to indicate whether an icon 301 is in a selection state or a non-selection state, the mobile communication device 1 according to the present embodiment has the following information described in the scenario data 21.

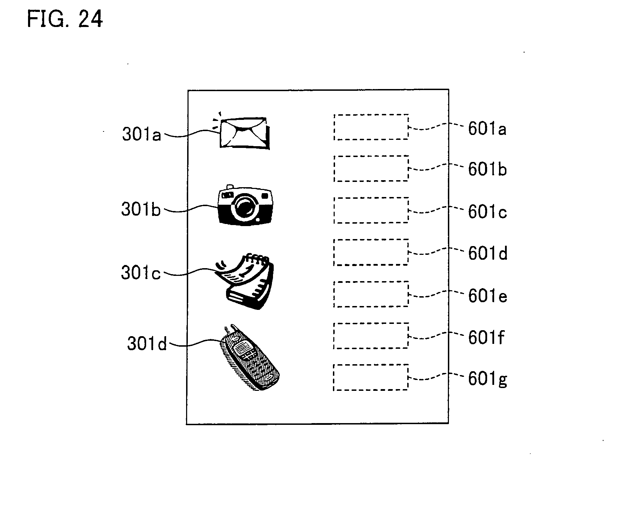

Specifically, as shown in Fig. 24, the scenario data 21 contains the selection-indicating-image display information 31 described so that the respective ranges of dotted frames 601a to 601g in which the selection-indicating image 401 can be displayed are set.

Here, in cases where the selection-indicating image 401 is displayed in the dotted frame 601a, the icon 301a, which specifies the mail function, is selected. Further, in cases where the selection-indicating image 401 is displayed in the dotted frame 601c, the icon 301b, which specifies the camera function, is selected. Further, in cases where the selection-indicating image 401 is displayed in the dotted frame 601 e, the icon 301c, which specifies the calendar function, is selected. Further, in cases where the selection-indicating image 401 is displayed in the dotted frame 601g, the icon 301d, which specifies the telephone function, is selected.

Meanwhile, the dotted frames 601b, 601d, and 601f indicate areas in which to display the selection-indicating image 401 during a transition from the icon 301a to the icon 301b, a transition from the icon 301b to the icon 301c, and a transition from the icon 301c to the icon 301d, respectively. It should be noted that Fig. 24 shows an example of a case where the scenario data (selection-indicating-image display information 31) related to a display of the selection-indicating image 401 is hypothetically displayed.

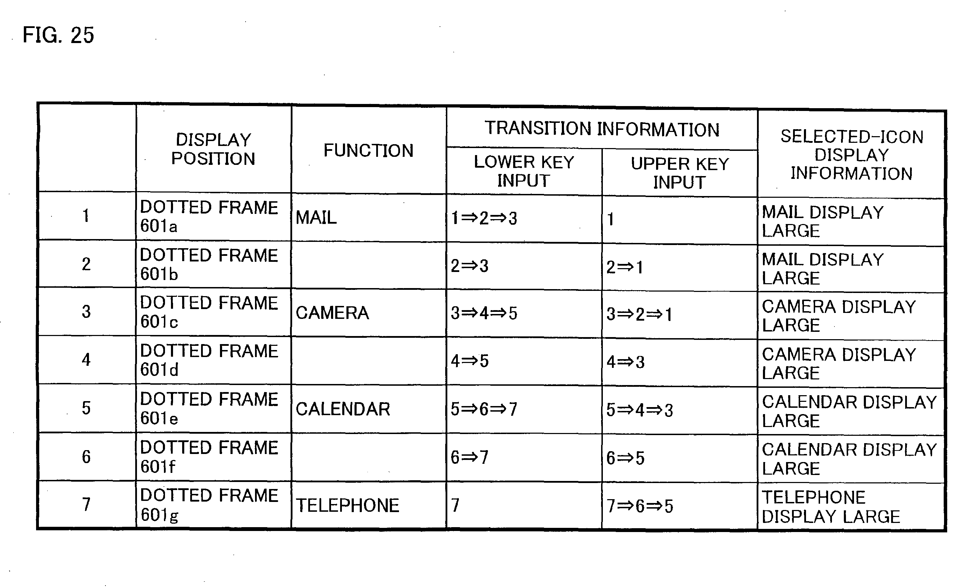

A judgment as to in which of the dotted frames 601a to 601g the selection-indicating image 401 is displayed can be made by adding as prescription information to the scenario data 21 a table, shown in Fig. 25, which contains the selected-icon display information 30 and the transition information 34. It should be noted that Fig. 25 shows an example of the selected-icon display information 30 and the transition information 34 that are contained in the scenario data 21. Specifically, the prescription information contained in the scenario data as shown in Fig. 25 contains information indicative of correspondence among a display position of the selection-indicating image 401, a function specified by an icon 301 indicated by the selection-indicating image 401 as being in a selection state, the transition information 34 for prescribing a display position to which the selection-indicating image 401 is shifted on the display area in accordance with a key operation of the arrow key 3, and the selected-icon display information 30 for prescribing the display state of the selected icon 301.

It should be noted that although the transition information 34 of Fig. 25 is expressed by numbers and arrows, the description means the following content.

In Fig. 25, each state is assigned a number. For example, the state in which the selection-indicating image 401 corresponding to the icon is displayed in the dotted frame 601 a and the icon specifying the execution of the mail function is displayed in enlarged size is assigned a number "1". The state in which the selection-indicating image 401 corresponding to the icon is displayed in the dotted frame 601c and the icon specifying the execution of the camera function is displayed in enlarged size is assigned a number "3". The state of transition between the state "1" and the state "3" is assigned a number "2".

It should be noted here that, for example, the transition information 34 corresponding to the state-indicating number "1" (LOWER KEY INPUT 1⇒2⇒3) means that the state "1" shifts to the state "3" via the state "2" when the lower key is pressed in the state "1".

More specifically, for example, suppose that the icon 301 for selecting the mail function is in a selection state as shown in Fig. 23(a) (state "1" of Fig. 25). In this state, a pressing of the lower key of the arrow key 3 causes the selection-indicating image 401 to move to the location of the selection-indicating image 401 as shown in Fig. 23(c) via the location of the selection-indicating image 401 as shown in Fig. 23(b), i.e., to such a position as to indicate that the icon 301 b indicative of the camera function is in a selection state, as indicated by the transition information 34 of Fig. 25.

Under the state in which the selection-indicating image 401 is positioned as shown in Fig. 23(b), for example, a pressing of the upper key of the arrow key 3 triggers a return to the state "1" as shown in Fig. 25, i.e., causes the selection-indicating image 401 to return to such a position (dotted frame 601a) as to select the icon 301a.

Further, it should be noted here that a selected icon 301 is set to be displayed in enlarged size and it depends on the movement zone of the selection-indicating image 401 which icon 301 is displayed in enlarged size. For example, in cases where the selection-indicating image 401 is positioned in the dotted frame 601e, the icon 301c indicative of the calendar display function is displayed in enlarged size.

As described above, the identification data contains the icon data 24 ... and the selection-indicating image data 25, and the scenario data 21 contains at least one of the selected-icon display information 30, the transition information 34, and the timing-prescribing information 35. This makes it possible to display the selection-indicating image 401 together with a selected icon 301 so that the selected icon 301 can be specified.

There may be an arrangement in which such a change in display state of an icon 301 is prescribed in accordance with input information received from a user as described above or depending on where in the display area the selection-indicating image 401 is displayed.

Further, such a change in display state as described above can be realized in the mobile communication device 1 according to the present embodiment as described below. That is, first, presuppose that the menu screen is initially in such a display state as shown in Fig. 23(a), i.e., in the state "1" of Fig. 25, and the decision state transition information storage section 26 of the mobile communication device 1 contains, as decision state transition information 27, display data for realizing the display state.

When the lower key is pressed in the initial state, the input information is received by the display data generating section 14 via the input section 11. The display data generating section 14 notifies the change instruction section 29 of the input information thus received. Upon receiving the notification of the input information, the change instruction section 29 instructs the scenario data acquisition section 12 to acquire scenario data 21 and reads out the decision state transition information 27 from the decision state transition information storage section 26.

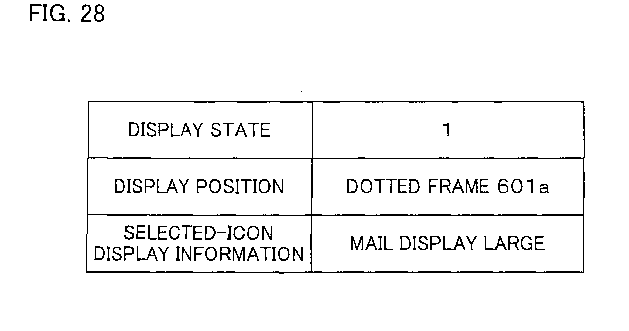

It should be noted, as shown for example in Fig. 28, that the decision state transition information 27 read out herein is information indicative of a display state immediately preceding the reception of the input information and is here information indicative of the initial display state. As described above, the mobile communication device 1 according to the present embodiment is arranged such that the transition state recording section 28 records, as decision state transition information 27, display data for causing the display section 2 to perform a display. Therefore, the decision state transition information 27 contains display information indicative of the display position of an icon and the display state of the icon. However, the information contained in the decision state transition information 27 is not limited to this. For example, the decision state transition information 27 may contain only a symbol indicative of a display state (e.g., state "1"). That is, the decision state transition information 27 may contain any information as long as the information shows a transition up until a display state immediately preceding reception of input information. More specifically, the decision state transition information 27 can contain the following information as information that shows a display state transition. Examples of such information include: ID numbers respectively assigned to an executable application and a displayable menu; and information indicative of the address of a memory where the ID numbers are stored.

As described above, the change instruction section 29 acquires the decision state transition information 27 and the scenario data 21, refers to the decision state transition information 27 and the scenario data 21, and then determines a display state corresponding to the input information. In this embodiment, since the lower key has been pressed in the initial state (state "1" shown in Fig. 25), the display state shifts to the state "3" via the state "2" shown in Fig. 25. Therefore, the change instruction section 29 instructs the display data generating section 14 so that the initial display state shifts to a display state (state of Fig. 23(b), state "3" of Fig. 25) in which the icon indicative of the camera function is in a selection state.

Upon receiving the instruction from the change instruction section 29, the display data generating section 14 changes the display data, and transmits, to the display control section 15 and the transition state recording section 28, the display data thus changed. Upon receiving the display data from the display data generating section 14, the display control section 15 controls the display section 2 so that the display section 2 performs a display in accordance with the display data. Meanwhile, upon receiving the display data from the display data generating section 14, the transition state recording section 28 stores the display data in the decision state transition information storage section 26 as decision state transition information 27. It should be noted that the decision state transition information 27 to be newly stored is managed in the decision state transition information storage section 26 so as to be recorded as a history instead of overwriting the decision state transition information 27 previously stored.

As described above, the scenario data 21 contains such transition information 34 of the selection-indicating image data 25 as based on input information received from a user, it is possible to determine how the selection-indicating image 401 is moved and displayed in response to received input information.

Further, the scenario data 21 contains the transition information 34. Therefore, even in the case of mobile communication devices whose respective input means have different operational feelings, it is possible to determine, simply by setting the scenario data 21 again in accordance with the respective operational feelings of the devices, in what position the selection-indicating information 401 is displayed in response to received input information.

Further, the scenario data 21 may describe, as timing-prescribing information 35, information related to the movement speed and/or moving style of the selection-indicating image 401. For example, the timing-prescribing information 35 specifies that an arrow serving as the selection-indicating image 401 moves from the location 601 a to the location 601b over a predetermined period of time and that the arrow takes the form of serial animations.

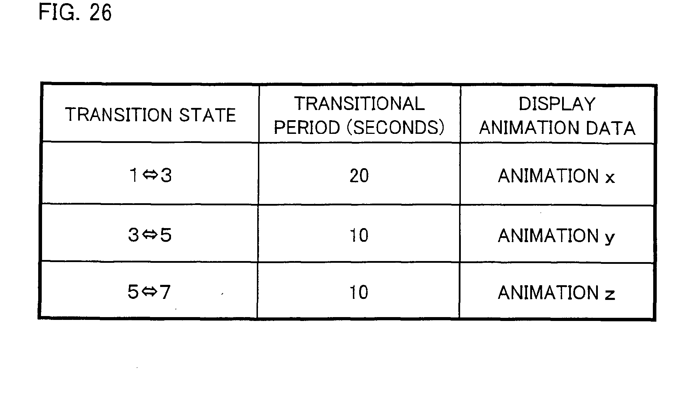

As shown in Fig. 26, examples of the timing-prescribing information 35 include information indicative of correspondence among the direction of transition of the display position of the selection-indicating image 401, the time required for the transition, and the type of animation to be displayed during the transition.

That is, the mobile communication device 1 according to the present embodiment is arranged such that in cases where the scenario data 21 contains such timing-prescribing information 35 as shown in Fig. 26, the change instruction section 29 refers to the timing-prescribing information 35 in response to input information received from the user and controls a display of the selection-indicating image 401 in the following manner.

First, suppose here that the timing-prescribing information 35 of Fig. 26 contains correspondence among information indicative of a change in display state (transition state), time required during a change from one display state to another, information indicative of an animation to be displayed during the change. Moreover, suppose that the display state changes from the state "1" of Fig. 25 (in which the selection-indicating image 401 is in the dotted frame 601 a) to the state "3" (in which the selection-indicating image 401 is in the dotted frame 601c), or that the display state changes from the state "3" to the state "1".

In this case, it takes 20 seconds for the display position of the selection-indicating image 401 to be changed from the dotted frame 601 a to the dotted frame 601c, for which 20 seconds the animation x is displayed. That is, the animation x is displayed for 20 seconds, and the display position of the selection-indicating image 401 moves from the dotted frame 601a to the dotted frame 601c after the 20 seconds has elapsed.

Thus, since the scenario data 21 contains the timing-prescribing information 35, the change instruction section 29 can instruct the display data generating section 14 to perform, at a predetermined timing, a display obtained by changing the display position of the selection-indicating image 401.

It should be noted that the execution of the animation x or the like can be realized when the display data generating section 14 activates an application and the like and causes a display of the animation in accordance with an instruction given from the change instruction section 29.

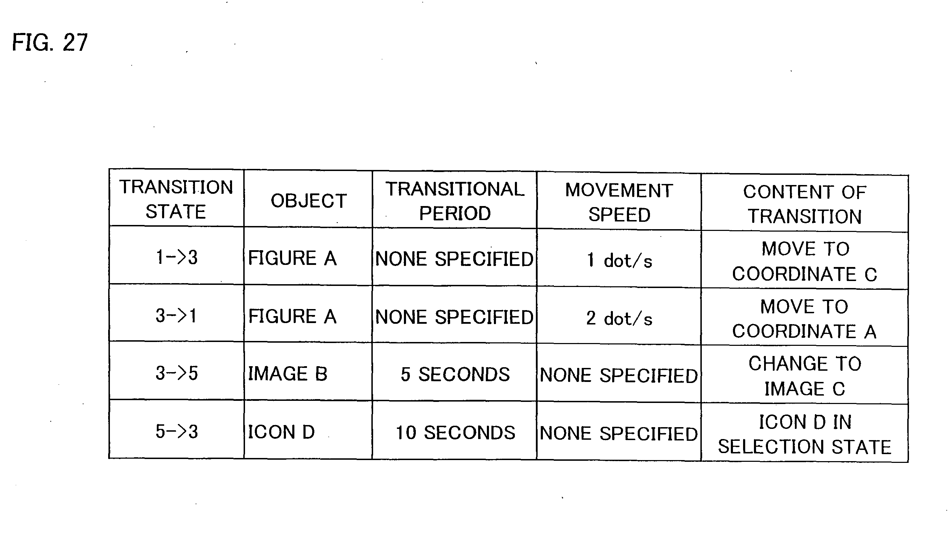

Further, such content as shown in Fig. 27 may be contained as another example of the timing-prescribing information 35. It should be noted that Fig. 27 shows another example of timing-prescribing information 35 contained in scenario data.

That is, as such timing-prescribing information as shown in Fig. 27, information that is more detailed than such timing-prescribing information as shown in Fig. 26 may be contained. More specifically, the timing-prescribing information 35 can be information indicative of correspondence among (i) a transition state, (ii) information indicative of an image, drawn figure, icon, or the like serving as an object to be moved, (iii) a transitional period, (iv) movement speed, and (v) the contents of transition containing (a) a position coordinate serving as a destination of transition, (b) an image to be displayed after the change, (c) state information as to whether the object is in a selection state, a non-selection state, or a decision state, and (d) the like.

In cases where the information shown in Fig. 27 is contained as timing-prescribing information 35, for example, a change from the transition state "1" (in which the selection-indicating image 401 is in the dotted frame 601a) to the transition state "3" (in which the selection-indicating image 401 is in the dotted frame 601c) is accompanied by the execution of such an animation that the currently displayed figure A moves from the current display position to the coordinate C on the display area at a movement speed of 1 dot per second.

Further, for example, in the case of a change from the transition state "3" (in which the selection-indicating image 401 is in the dotted frame 601c) to the transition state "5" (in which the selection-indicating image 401 is in the dotted frame 601e), the image C replaces the image B after five seconds so as to be displayed.

Further, for example, in the case of a change from the transition state "5" (in which the selection-indicating image 401 is in the dotted frame 601e) to the transition state "3" (in which the selection-indicating image 401 is in the dotted frame 601c), an animation that indicates that the icon D (icon for specifying the camera function) is in a selection state is displayed for 10 seconds.

As described above, in cases where the timing-prescribing information 35 contains such information as shown in Fig. 27, a figure or image, such as a background image or frame, other than the selection-indicating image 401 can be moved so as to be displayed by the display section 2 in a changed display state.

Thus, since the mobile communication device 1 according to the present embodiment is arranged such that the scenario data 21 contains the timing-prescribing information 35, the display position(s) of the selection-indicating image data 25 and/or another figure or image on the display area can be changed at various timings prescribed by the timing-prescribing information 35. Furthermore, it is possible to easily switch to a desired timing of change simply by rewriting a description of the scenario data 21 containing the timing-prescribing information 35.

In the foregoing, the information contained in the table shown in Fig. 25 is shown as an example of prescription information contained in the scenario data 21. However, the prescription information contained in the scenario data 21 is not limited to this.

For example, there may be such an arrangement that the display position of the selection-indicating image 401 as prescribed by the transition information 34 and the selected-icon display information 30 are associated with each other and the display state of a selected icon 301 is changed in accordance with the display position of the selection-indicating image 401.

Further, although the transition information 34 shown in Fig. 25 prescribes directions of movement of the selection-indicating image 401 by the upper and lower keys of the arrow key 3, there may be such an arrangement that the directions of movement of the selection-indicating image 401 is prescribed in accordance with given operation keys such as an A key and a B key.

In the case of such an arrangement that the directions of movement of the selection-indicating image 401 are assigned to given operation keys, the operation keys are assigned so as to respectively correspond to operation directions of input means (e.g., arrow key 3) of the mobile communication device 1. Thus, a change in display position of the selection-indicating image 401 can be realized with use of given operation keys appropriately in accordance with the operationality of input means (e.g., arrow key 3) of the mobile communication device 1.

Further, the mobile communication device 1 according to the present embodiment is arranged such that on such a menu screen as shown in Fig. 3, the selection-indicating image 401 shown in Figs. 4(a) and 4(b) indicates whether an icon 301 is selected or deselected. However, a method for indicating whether an icon 301 is selected or deselected is not limited to this. For example, it is possible to perform the following display to indicate whether an icon 301 is selected or deselected.

That is, there may be such a setting that an icon 301 existing in a predetermined display position (e.g., the uppermost position in cases where icons 301 are arranged in lengthwise) is always judged to be in a selection state.

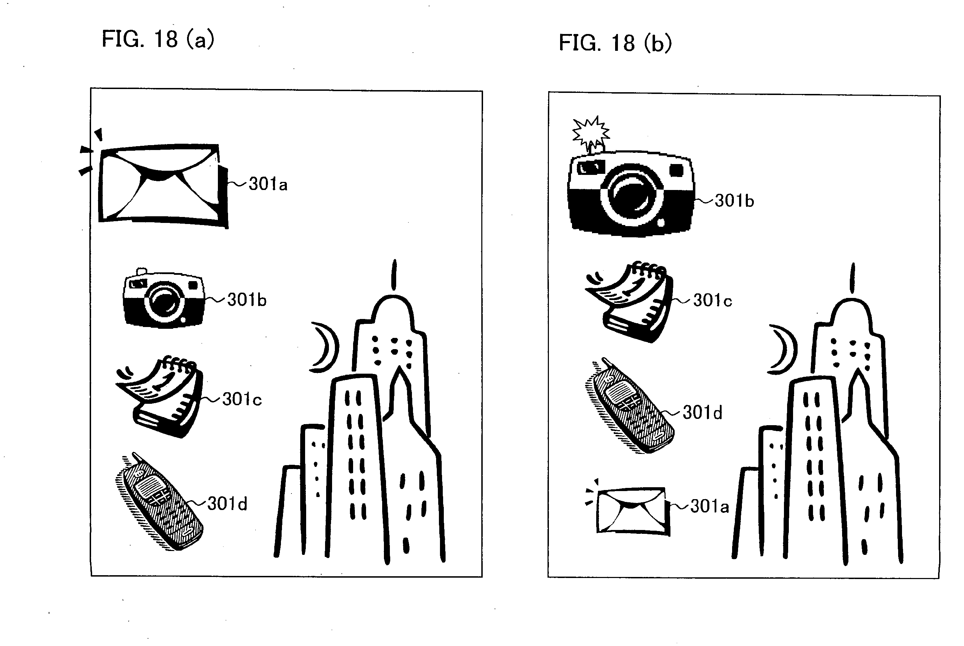

Furthermore, for example, there may be such a setting that, as shown in Fig. 18(a), an icon 301 is displayed bigger when in the predetermined display position than when in another display position, and that the design of an icon 301 to be displayed is changed. Fig. 18(a), showing an example of a menu screen that is displayed by the display section 2 of the mobile communication device 1 according to the present embodiment, shows an example of how the menu screen is displayed in the default settings.

More specifically, in cases where an input from the user causes a change in icon 301 to be in a selection state, i.e., in cases where the selected icon 301 changes from the icon 301a to the icon 301b, the icon 301b is displayed as the uppermost one of the icons 301 arranged lengthwise, as shown in Fig. 18(b). Further, the icon 301b is displayed bigger than in a non-selection state, and the selected icon 301b is changed to a picture of a camera setting off a flash bulb. Fig. 18(b), showing an example of a menu screen that is displayed by the display section 2 of the mobile communication device 1 according to the present embodiment, shows an example of how the menu screen is displayed in cases where the camera function is in a selection state.

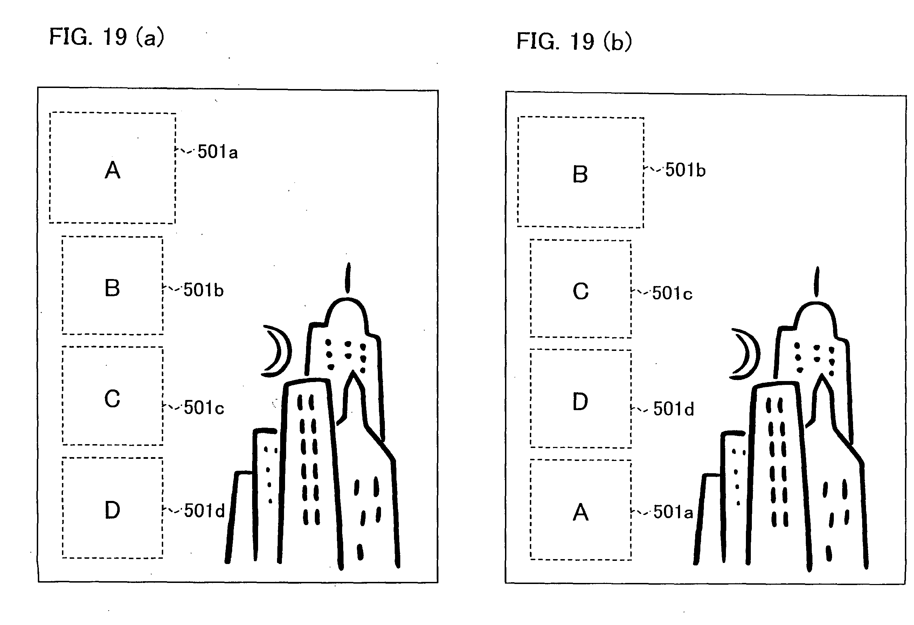

As described above, in the case of a setting in which a selected icon 301 is displayed in a predetermined position, the scenario data 21 indicates a change in display form from Fig. 19(a) to Fig. 19(b). Fig. 19(a) shows an example of a case where the mobile communication device 1 according to the present embodiment hypothetically displays only scenario data 21 that prescribes the form in which each icon 301 is displayed prior to reception of an instruction for change in selection state. Further, Fig. 19(b) shows an example of a case where the mobile communication device 1 according to the present embodiment hypothetically displays only scenario data 21 that prescribes the form of a display to be performed in cases where a change instruction given from the user causes a change selected icon 301 to be in a selection state.

That is, in cases where there is no instruction for change in icon 301 to be in a selection state, the scenario data 21 prescribes that, as shown in Fig. 19(a), the icons 301a, 301b, 301c, and 301d are arranged in this order from above on the display area so as to be in predetermined positions indicated as the dotted frames 501a to 501d, respectively.

Further, the scenario data 21 also prescribes that the uppermost one of the icons 301 arranged lengthwise is displayed bigger than in a non-selection state. Furthermore, the scenario data 21 also prescribes that a display of the icon 301 to be displayed bigger is changed to a display of another image.

It should be noted here that the scenario data 21 is described such that when an instruction for change in icon 301 to be in a selection state is received from the user, each icon 301 is disposed in a position corresponding to the instruction.

For example, when the user presses the arrow key 3 downward on the menu screen shown in Fig. 18(a), the selected icon 301 changes from the icon 301a to the icon 301b as shown in Fig. 18(b). Along with the change, the icons 301 are arranged such that the icon 301b is the uppermost one of the icons arranged lengthwise and the icon 301a, which was in the uppermost position, is in the lowermost position. That is, the scenario data 21 prescribes that in accordance with the user's input operation, the dotted frame 501a moves to the position in which the dotted frame 501d was before the change and the dotted frame 501b moves to the position in which the dotted frame 501a was before the change.

As for a scaled-up display of a selected icon 301, the scenario data 21 may contain a description of information indicative of the size to which the selected icon 301 is scaled up, or may contain a description of information indicative of the magnifying power to which the original size of the selected icon 301 is increased.

Further, the scenario data 21 may be described in conformity to XML (Extensible Markup Language). Further, in cases where the scenario data 21 is described in conformity to XML, the scenario data 21 can contain a description, based on a script language such as an ECMA script or a Java® script, which manages, in accordance with an input from the arrow key 3 or the like, a display state for indicating a state transition such as a display of a selection or non-selection state of an icon 301 or a change in position of an icon 301.

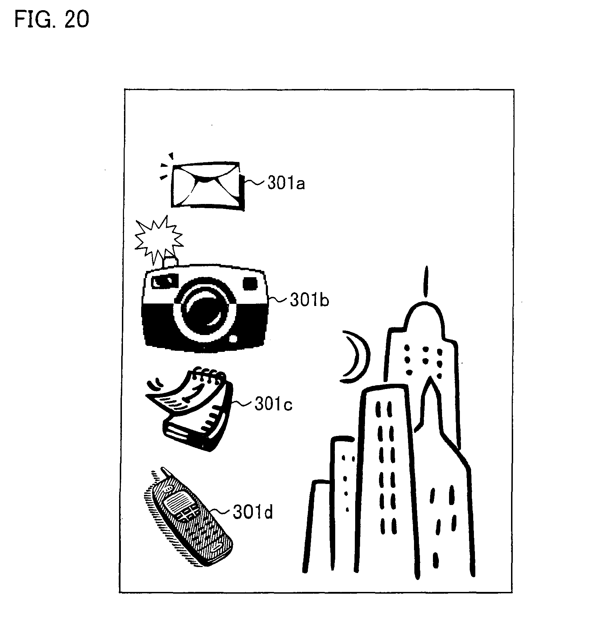

Further, in Figs. 18(a) and 18(b), the selected icon 301 is in such a display position as to be the uppermost one of the icons arranged lengthwise. However, the present invention is not limited to this. For example, as shown in Fig. 20, the selected icon 301 may be the second uppermost one of the icons arranged lengthwise. That is, it is only necessary that the user be allowed to visually grasp whether or not an icon displayed in the display area of the display section 2 is a selection state.

Further, the mobile communication device 1 is arranged so as to be able to switch an icon 301 between a selection state and a non-selection state in accordance with an input from the arrow key 3. However, the mobile communication device 1 is not limited to such an arrangement. For example, the mobile communication device 1 may be arranged to switch an icon between a selection state and a non-selection state in accordance with information indicative of passage of a predetermined period of time or such position information as obtained from a GPS (global positioning system).

Further, as described above, the mobile communication device 1 is arranged such that the transition state recording section 28 stores, as the decision state transition information 27 in the decision state transition information storage section 26, information related to a display state of an icon 301 that is displayed by the display section 2 at the time of reception of a user's instruction such as an activation instruction that is given by pressing the decision key 9 or an activation instruction that is given in a display state, immediately preceding the current display state, which is indicated by pressing the return key 10.

In view of this, the mobile communication device 1 according to the present embodiment can restore a selection state of an icon 301 with reference, for example, to the decision state transition information 27. That is, on the menu screen on which to display the main menu, a plurality of options such as the mail function, the camera function, and the data folder are displayed. For example, when the user selects the data folder by operating the arrow key 3 and then presses the decision key 9, the display section 2 displays information contained in the data folder.

A pressing of the return key 10 in the state in which the display section 2 displays information contained in the data folder triggers a return to the state that immediately precedes the pressing of the decision key 9, i.e., to the state in which the data folder has been selected.

Thus, the mobile communication device 1 according to the present embodiment restores a selection state of an icon 301 with reference to the decision state transition information 27.

Further, as shown in Fig. 5, the scenario data 21 contains image data for a background against which an icon 301 is displayed. However, the scenario data 21 is not limited to this. For example, the scenario data 21 may be data that does not contain such image data for a background.

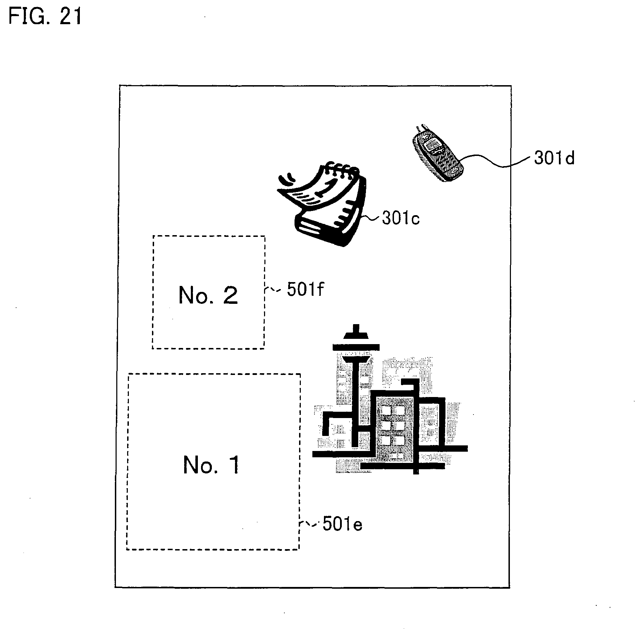

Further, as shown, for example, in Fig. 21, the scenario data 21 may contain an image of a specific icon (icons 301c and 301d in Fig. 21).

That is, as shown in Fig. 21, only the areas indicated by the dotted frames 501e and 501f are allowed to display icons 301 that are based on icon data 24 assigned table numbers corresponding to the dotted frames 501e and 501f, respectively. Meanwhile, the respective display positions of the icon 301c indicative of the calendar function and the icon 301d indicative of the telephone function are fixed, and the icons 301c and 301d are always displayed in the same positions and in the same sizes, respectively, regardless of whether or not the icons 301c and 301d are in a selection state.

Thus, depending on how the mobile communication device 1 is used or what function the mobile communication device 1 has, the icon data 24 does not need to be separate from the scenario data 21, and may be contained in the scenario data 21.

The scenario data 21 is information that contains information for prescribing a display of the icon data 24 on the display area and information for prescribing an operation of the mobile communication device 1 in accordance with the decision state transition information 27. It should be noted that the "information for prescribing a display" is display-related information containing the states of the size, color, brightness, and the like of a displayed icon, a displayed character string, or the like, the display position of the icon, the character string, or the like in the display area, a user-selected state of the displayed icon or the displayed character string.

Further, the "information for prescribing an operation" is information for prescribing such an operation of the mobile communication device 1 (information processing device) as causing the mobile communication device 1 (information processing device) to stop an animation currently displayed by the display section , to start the animation, or to activate another application.

More specifically, the scenario data 21 has such a data structure as shown in Fig. 22, and contains selected-icon display information 30, selection-indicating-image display information 31, decoration data 33, transition information 34, and timing-prescribing information 35.

Further, the scenario data 21 may contain content for deciding, in accordance with the setting status of the mobile communication device 1, whether or not a displayed icon, character, or the like can be selected. More specifically, the setting status of the mobile communication device 1 indicates a state of restriction of use of the mobile communication device 1 or a state of addition of a function to the mobile communication device 1, such as a state in which an SD card has been placed into the mobile communication device 1 and a state in which the mobile communication device 1 has been set to a silent mode.

Further, in cases where the menu contains an icon indicative of the execution of formatting of an SD card and where an SD card has been placed into the mobile communication device 1, the information for deciding whether or not an icon, a character, or the like can be selected is information for enabling the icon indicative of the execution of formatting of the SD card. Meanwhile, in the case of such setting status that no SD card has been placed into the mobile communication device, the information for deciding whether or not an icon, a character, or the like can be selected is information for preventing selection of the icon indicative of the execution of formatting of an SD card. Further, in the case of such setting status that the mobile communication device 1 has been set to the silent mode, the information for deciding whether or not an icon, a character, or the like can be selected is information for setting the mobile communication device 1 so that an icon indicative of volume control of audio output from the mobile communication device 1 cannot be selected.

Furthermore, the scenario data 21 may further contain information for designating a selectable icon or the like in accordance with the remaining battery level of the power supply of the mobile communication device 1, the condition of communication with another mobile communication device, or a state of activation of an application being activated.

It should be noted that the mobile communication device 1 according to the present embodiment is arranged so as to store a plurality of icon data groups 22 and plural pieces of scenario data 21. Moreover, the mobile communication device 1 according to the present embodiment is arranged such that a change in each of the plurality of icon data groups 22 ..., a change in each of the plural pieces of scenario data 21 ..., and a change in each of the plural pieces of table information 23 are made in accordance with input information received from the user. However, the mobile communication device 1 according to the present embodiment may be arranged such that an instruction to make such a change is triggered by passage of a predetermined period of time or by such position information as obtained from a GPS.

Further, the mobile communication device 1 according to the present embodiment is preferably arranged such that the content of the table information 23 can be edited in accordance with an operation instruction given from the user.

Further, the table information 23 may be set such that in cases where the number of pieces of icon data 24 managed is larger than the number of pieces of icon data 24 to be displayed in the display area, an icon 301 to be displayed is changed in accordance with the scenario data 21.

More specifically, suppose, for example, that the table information 23 manages icon data 24 ... indicative of icons A to J. Further, suppose that scenario data A prescribes that the icons A to D are displayed and scenario data B prescribes that the icons E to J are displayed.

For example, in cases where the icons 301 ... are displayed in accordance with the scenario data A, the icons A to D are displayed, among the icon data 24 ... indicative of the icons A to J as managed in the table information 23, in accordance with the scenario data A.

Meanwhile, in cases where the icons 301 ... are displayed in accordance with the scenario data B, the icons E to J are displayed, among the icon data 24 ... indicative of the icons A to J as managed in the table information 23, in accordance with the scenario data B. Thus, the mobile communication device 1 according to the present embodiment may be arranged such that an icon data group 22 to be displayed in accordance with the scenario data 21 is changed without changing the table information 23.

Further, the mobile communication device 1 according to the present embodiment is preferably arranged so as to be able to acquire, from an external device, scenario data 21 ... and icon data groups 22 to be stored in the information storage section 20.

That is, in the mobile communication device 1 according to the present embodiment, the function execution control section 16 uses the antenna 8 to communicate with another information processing device via a mobile-phone base station. Moreover, the antenna 8 receives the scenario data 21 ... and the icon data groups 22 ... from the information processing device via the base station, and the function execution control section 16 stores the received data in the information storage section 20.

It should be noted that the function execution control section 16 and the antenna 8 realizes data acquisition means.

Thus, in the case of an arrangement of scenario data 21 ... and icon data groups 22 ... can be acquired from another information processing device, scenario data 21 ... and icon data groups 22 ... can be increased. Therefore, such an arrangement has advantages of increasing display patterns of the menu screen and of always adding the most recent data to the information storage section 20.

Further, as described above, the mobile communication device 1 according to the present embodiment is arranged such that: the information storage section 20 has plural pieces of scenario data 21 ... stored therein; and the scenario data acquisition section 12 selects a desired piece of scenario data 21 in accordance with an instruction given from the display data generating section 14 and acquires the desired piece of scenario data 21. Moreover, the mobile communication device 1 is arranged so as to be able to change the display form of an icon 301 by changing the selected piece of scenario data 21 to another piece of scenario data 21. However, the mobile communication device 1 is not limited to such an arrangement. For example, the mobile communication device 1 may be arranged so as to further include a scenario data changing section (scenario data changing means; not shown) for changing, in accordance with input information received by the main control section 10 via the input section 11, a description of scenario data 21 stored in the information storage section 20.

Thus, in the case of an arrangement in which the scenario data changing section is provided, it is not necessary to necessarily store plural pieces of scenario data 21 ... in the information storage section 20. That is, it is only necessary that at least one piece of scenario data 21 be stored, and the display pattern of an icon 301 can be diversified by changing the scenario data 21 in various ways in accordance with input information received by the input section 11.

Further, the display state transition described above is not limited exclusively to a transition between pieces of information related to a display indicative of a display state or selection state of an icon 301, but may also encompass a transition between changes in display state, for example, as to whether to cause the menu screen to show a background image or animation irrelevant to the icon 301.

These changes in display state can be prescribed in the mobile communication device 1 according to the present embodiment by causing the scenario data 21 to contain a script that prescribes these changes.

For example, in cases where SVG data containing the script is used as scenario data, a predetermined script variable is assigned a number indicative of a transition state. Moreover, the mobile communication device 1 is arranged so as to be able to set the transition state by acquiring the transition-state-indicating number assigned to the variable. In the case of such an arrangement of the mobile communication device 1, it is possible to activate an application without input information received from a user and to change the type of application being activated.

Alternatively, by arranging the mobile communication device 1 so that it can acquire, from outside, information related to a focus state with respect to an object, such as a figure or an image, which is contained in the SVG data and set the information, the display state and movement of the object can be controlled in accordance with changes in focus state. The term "focus state" here means a display state in which a specific icon, a specific figure, or the like is held in focus on a display screen such as a menu screen.

For example, the mobile communication device 1 makes a change in focal object from one icon to another, the change instruction section 29 reads out and executes, in accordance with the change in focal object, the script described in the scenario data 21. Then, at the time of execution of the script, the change instruction section 29 makes a change to a specific variable value and instructs the display data generating section 14 to realize a display state corresponding to the variable thus changed.

It should be noted that the value to be stored as a specific variable may be a value that prescribes a display state transition or may be a value that prescribes a specific display state or a selection state of an icon 301. In the case of such an arrangement, the mobile communication device 1 can make a change from one display state to another in accordance with a change in focal object.

Further, the type of application to be activated may be determined by a value stored as a variable of a predetermined script contained in the SVG data, or may be determined by link information contained in <a> element of the SVG data.

It should be noted that the SVG data can be used as scenario data because the SVG data can describe the layout of an object, the timing of an animation, and the like. Further, the SVG data can also be used as identification data because the SVG data can contain link information for each object.

Further, the SVG data can use a script to prescribe the execution of a predetermined process such as a change in icon to be focused. Examples of the predetermined process include a process of setting the value to a predetermined script variable in accordance with time, a process of indicating the start or end of an animation, and a process of outputting the value of a predetermined script variable to outside. It should be noted that the content of the predetermined process may vary from one mobile communication device 1 to another. For example, even in cases where users input information indicative of the same operation instruction in response to the same identification data and scenario data, mobile communication devices 1 may execute different process, for example, in such a manner that one of the mobile communication devices 1 vibrates and an LED of the other mobile communication device 1 emits light.

Furthermore, the mobile communication device 1 according to the present embodiment can also be arranged in the following manners.

That is, the mobile communication device 1 according to the present embodiment performs various operations by designating icons displayed on a screen, and may constitute a graphical user interface by using (i) image data containing information that specifies a process and (ii) scenario data 21 containing information related to the display position of the image data.

Further, the mobile communication device 1 according to the present embodiment may be arranged such that: the image data and the scenario data 21 are set independently; and different graphical user interfaces are realized in accordance with different combinations of the image data and the scenario data 21.

Further, the mobile communication device 1 according to the present embodiment may be arranged so as to further include an input section 11 for receiving an input from a user, wherein the scenario data 21 contains information indicative of a state transition that is based on the input section 11 and information for changing the display position or transition state of the image data in accordance with the state transition.

Further, the mobile communication device 1 according to the present embodiment may be arranged such that the content of a display or the content of a process to be executed is changed in accordance with the transition state of the image data.

Further, the mobile communication device 1 according to the present embodiment may be arranged so as to further include a storage device in which to store the image data and the scenario data.

Further, the mobile communication device 1 according to the present embodiment may be arranged so as to further include data receiving means for receiving the image data or the scenario data 21.

Further, the mobile communication device 1 according to the present embodiment is characterized in that the image data is vector data.

Further, the mobile communication device 1 according to the present embodiment is preferably arranged so as to further include scenario data changing means for changing (i) image data designated by the scenario data to (ii) another piece of image data.

Further, the mobile communication device 1 according to the present embodiment may be arranged such that: the storage device stores an image data table on which the image data and the scenario data are associated; the scenario data 21 is designated by a number of the image data table; and a graphical user interface is constituted by image data corresponding to a designated table number.

Further, the mobile communication device 1 according to the present embodiment may be arranged so as to further include image data table changing means for changing the image data of the image data table to another piece of image data.

Further, the mobile communication device 1 according to the present embodiment may be arranged so as to further include image data table selecting means for selecting the image data table from a plurality of image data tables.

Further, the mobile communication device 1 according to the present embodiment is preferably arranged such that the scenario data 21 is XML data.

Further, the mobile communication device 1 according to the present embodiment may be arranged such that the scenario data 21 is binary data.

Further, the mobile communication device 1 according to the present embodiment may be arranged so as to further include scenario data selecting means for selecting the scenario data 21 from plural pieces of scenario data.

Further, the mobile communication device 1 according to the present embodiment is preferably arranged such that the information contained in the image data so as to specify the process contains information designating an application to be executed.

Further, the mobile communication device 1 according to the present embodiment may be arranged such that the information contained in the image data so as to specify the process contains parameter information to be provided to an application to be executed.

Further, a method according to the present embodiment for controlling a mobile communication device 1 can include the following step.

That is, the method according to the present embodiment for controlling a mobile communication device 1 includes the step of realizing a graphical user interface by using (i) image data containing information that specifies a process and (ii) scenario data containing information related to the position and movement of the image data.

Further, although the mobile communication device 1 has been described with respect to a case where the icon data 24 serves as identification data, the identification data is not limited to such icon data 24. The identification data only needs to be information that specifies a process corresponding to an input instruction, and may be character data or animation data.

Furthermore, the identification data may be a combination of an icon and a character string indicative of a process specified by the icon. Examples of such a combination include identification data expressed by a combination of an icon indicative of the mail function and a character string indicative of the mail function.

Further, although the mobile communication device 1 according to the present embodiment has been described with respect to a case where a process corresponding to an input instruction and identification data (icon data 24) correspond one-to-one with each other as do the data indicative of an image of a mail and the mail function, it is not necessary that identification data and a process indicated by the identification data correspond one-to-one with each other. For example, the mobile communication device 1 may be arranged so as to retain plural types of table in which a plurality of processes can be referred to in accordance with an input instruction, wherein the identification data is associated with the tables.

Further, the mobile communication device 1 according to the present embodiment has been described on the premises of an arrangement in which when an icon displayed on a menu screen is selected, an application corresponding to the icon is executed. However, for example, menu items to be displayed as icons in the mobile communication device 1 may be stratified as in a tree structure. In such a case where menu items are tree-structured, each node of the structure is assigned each application such as the camera function or the mail function and an ID number set for each application. The selection of the application can be realized by designating the ID number.

Further, in such a case where menu items are managed for each stratum by a tree structure, the mobile communication device 1 is arranged so that when an icon is selected by pressing the decision key 9, the mobile communication device 1 stores, as decision state transition information 27, an ID number of a subclass menu item set so as to be associated with the icon thus selected. Meanwhile, in cases where the return key 10 is pressed in a state in which a menu item of a subclass is displayed, the mobile communication device 1 may arranged so as to store, as decision state transition information 27, an ID number of an menu item that is on a stratum immediately above the subclass.

Further, in cases where menu items are not tree-structured, a pressing of the decision key 9 causes the mobile communication device 1 to store, as decision state transition information 27, an ID number of a menu item of a destination designated by the pressing. Further, the mobile communication device 1 may be arranged such that a pressing of the return key 10 causes the mobile communication device 1 to store, as decision state transition information 27, an ID number of a menu item (i.e., a menu item selected one stage before the current menu item) of a destination designated by the pressing.

Further, the mobile communication device 1 may be arranged such that so as to generate, in acquiring decision state transition information 27, table information indicative of correspondence between the currently selected ID number and decision state transition information 27 corresponding to the current selection state and acquire the decision state transition information 27 by using the table information.

Further, as described above, the mobile communication device 1 according to the present embodiment is arranged such that the information storage section 20 stores plural pieces of scenario data 21 ... and a plurality of icon data groups 22 ... and that these pieces of scenario data 21 and these icon data groups 22 can be combined with reference to the table information 23.

However, in the case of paid distribution of scenario data 21 and icon data groups 22, the mobile communication device 1 is preferably arranged so as to be able to limit free combinations of the scenario data 21 and the icon data groups 22.

In the case of such an arrangement, the table information 23 contains information indicative of possible or impossible combinations of the scenario data 21 and the icon data groups 22.

Further, in a system including a mobile communication device 1 according to the present embodiment and a server device communicably connected to the mobile communication device 1, the server device stores icon data groups 22 ..., and the mobile communication device 1 stores scenario data 21 and table information 23. Moreover, the mobile communication device 1 may be arranged so as to acquire the icon data groups 22 from the server device, to combine, with reference to the table information, the acquired icon data groups 22 and the scenario data 21 retained in the mobile communication device 1, and to display the combination.

On the other hand, the system may be arranged such that: the server device stores scenario data 21; the mobile communication device 1 stores icon data groups 22 and table information 23; and the mobile communication device 1 acquires the scenario data 21 from the server device, combines, with reference to the table information 23, the acquired scenario data 21 and the icon data groups 22 retained in the mobile communication device 1, and displays the combination.

Furthermore, the system may be arranged such that: the server device stores table information 23; the mobile communication device 1 stores icon data groups 22 and scenario data 21; and the mobile communication device 1 acquires the table information 23 from the server device, combines, with reference to the table information 23 thus acquired, the icon data groups 22 and the scenario data 21 each retained in the mobile communication device 1, and displays the combination.

Further, the blocks of the mobile communication device 1, or the input section 11, the scenario data acquisition section 12, the icon data acquisition section 13, the display data generating section 14, the display control section 15, the function execution control section 16, the table information changing section 17, the transition state recording section 28, and the change instruction section 29 of the main control section 10 in particular, may be constituted by hardware logic, or may be constituted by software with use of a CPU as described below.

That is, the mobile communication device 1 includes: a CPU for executing an instruction of a control program for realizing various functions; a ROM in which the program has been stored; a RAM for expanding the program; and a storage device (storage medium), such as a memory, in which the program and various data are stored. The object of the present invention can also be achieved by providing the mobile communication device 1 with a storage medium in which a program code (executable program, intermediate code, or source program) of the control program of the mobile communication device 1 has been stored in a computer readable manner, and by causing the computer (CPU or MPU) to read and execute the program code stored in the storage medium, the program code serving as software for realizing the aforementioned functions.

Examples of the storage medium include: a tape such as a magnetic tape or a cassette tape; a magnetic disk such as a floppy® disk or a hard disk; an optical disk such as a CD-ROM, an MO, an MD, a DVD, or a CD-R; a card such as an IC card (inclusive of a memory card) or an optical card; and a semiconductor memory such as a mask ROM, an EPROM, an EEPROM, or a flash ROM.

Further, the mobile communication device 1 may be connectable to a communication network, and the program code may be supplied via the communication network. Examples of the communication network include, but are not particularly limited to, the Internet, an intranet, an extranet, a LAN (local area network), an ISDN (integrated services digital network), a VAN (value added network), a CATV (cable TV) communication network, a virtual private network, a telephone network, a mobile communication network, and a satellite communication network. Further, usable examples of a transmission medium that constitutes the communication network include, but are not particularly limited to, a cable medium such as IEEE 1394, a USB, power line communication, a cable TV line, a telephone line, or an ADSL line and a wireless medium such as IrDA, infrared rays used for a remote controller, Bluetooth®, IEEE 802.11, HDR (High Data Rate), a mobile phone network, satellite connection, or a terrestrial digital network. It should be noted that the present invention can also be realized in the form of a computer data signal realized by electronic transmission of the program code and embedded in a carrier wave.

As described above, an information processing device (e.g., mobile communication device 1) is an information processing device including a display section for displaying information in a specific display style, the information processing device including: generating means (e.g., display data generating section 14) for generating, in accordance with (i) identification data (e.g., icon data 24) for specifying a process that is executable in the information processing device and (ii) scenario data serving as information for prescribing a display of the identification data on a display area of the display section, display control information by which the identification data is displayed in the specific display style; and display control means (e.g., display control section 15) for performing display control on the display section 2 in accordance with the display control information generated by the generating means.

This brings about an effect of making it possible to easily change the display style of identification data without the need of a process of changing a large program such as a UNIX window manager.

Further, in order to solve the foregoing problems, a method according to the present invention for controlling an information processing device is a method for controlling an information processing device including a display section for displaying information in a specific display style, the method including the steps of: generating, in accordance with (i) identification data for specifying a process that is executable in the information processing device and (ii) scenario data serving as information for prescribing a display of the identification data on a display area of the display section, display control information by which the identification data is displayed in the specific display style; and performing display control on the display section in accordance with the display control information generated thus generated.

The foregoing method makes it possible, in the step of generating display control information, to generate display control information in accordance with data separated into identification data and scenario data. Further, the foregoing method makes it possible, in the step of performing display control, to cause, in accordance with the display control information thus generated, the display section to display the identification data in a specific display style.

This brings about an effect of making it possible to easily change the display style of identification data without the need of a process of changing a large program such as a UNIX window manager.

Further, in the foregoing arrangement, the information processing device according to the present invention may be arranged so as to further include input means (e.g., input section 11) for receiving input information from outside, wherein the generating means generates, in accordance with the scenario data and the identification data, display control information by which the identification data is displayed in a display style corresponding to the input information received by the input means.

According to the foregoing arrangement, the provision of the input means makes it possible to receive input information from a user. Further, the generating means can generate, in accordance with the scenario data and the identification data, display control information by which the identification data is displayed in a specific display style corresponding to the input information thus received.

For this reason, the information processing device according to the present invention can display information in a display style corresponding to input information that has been received.

Further, in the foregoing arrangement, the information processing device according to the present invention may be arranged so as to further include recording means (e.g., transition state recording section 28) for recording state transition information (e.g., decision state transition information 27) serving as history information indicative of a display state of the identification data in the display section; and instructing means (e.g., change instruction section 29) for instructing, in accordance with the state transition information recorded by the recording means, the generating means to change the display control information.

The "display state of the identification data" here means: the state, such as size, color, and brightness of an icon or the like displayed by the display section; the display position of the icon or the like in the display area; the state in which the displayed icon is selected by a user; and the like.

According to the foregoing arrangement, the provision of the recoding means makes it possible to record information indicative of state transition in the display section. That is, the information processing device according to the present invention can record information indicative of a current display state in the display section and a history of changes in display state up until the current display state.

Further, the provision of the instructing means makes it possible to control, with reference to prescription information, the generating means so that the generating means changes the display control information so that the display state corresponds to the state transition information recorded by the recording means.

For example, suppose that an application is activated via multiple input operations. In this case, upon termination of a process done by the application, the information processing device according to the present invention has a record of a display state preceding the execution of the application process, so that the instructing means can instruct the generating means to return to the display state.

Therefore, the information processing device according to the present invention makes it possible to perform another operation subsequently to the preceding operation, thereby enabling an improvement in operationality.

It should be noted that the information processing device according to the present invention may be arranged such that the recording means stores all the display states of the identification data or may be arranged such that the recording means stores the most recent history or a history starting from a specific display state that can be restored. The "specific display state that can be restored" here means a display state in which the states of all objects are uniquely predetermined.

Further, in the foregoing arrangement, the information processing device according to the present invention may be arranged such that: the scenario data contains prescription information for prescribing a change in display state of the identification data in the display section in accordance with the state transition information; and when the input means has received, as input information, information that gives an instruction to change the display state, the instructing means instructs, in accordance with the state transition information recorded by the recording means and the prescription information, the generating means to change the display control information.

The "prescription information" here means, for example, information for prescribing such a change in display state in the information processing device as causing the information processing device to stop an animation currently displayed by the display section, to start the animation, or to activate another application.

According to the foregoing arrangement, the provision of the instructing means makes it possible to give an instruction to change the display control information in accordance with the state transition information. For this reason, the information processing device according to the present invention can change the display control information in accordance with a transition in the display state.

Further, in the foregoing arrangement, the information processing device according to the present invention may be arranged such that: the state transition information is history information expressing, with specific symbol information, the display state of the identification data in the display section; the prescription information contains information, associated with the symbol information, which indicates changes in the display state; and the instructing means instructs, in accordance with the state transition information and the prescription information, the generating means to change the display control information so that the display state corresponds to the symbol information.

Examples of the symbol information include symbol information such as numbers. The prescription information contains information, associated with the symbol information, which indicates changes in the display state. Therefore, the instructing means can instructs, in accordance with the symbol information, the generating means to change the display control information.

Further, as described above, the state transition information can be expressed by specific symbol information, so that the data amount of state transition information to be recorded can be reduced.

Further, in the foregoing arrangement, the information processing device according to the present invention may be arranged such that the instructing means instructs, in accordance with the state transition information recoded by the recording means and the prescription information, the generating means to change information indicative of a display of a selection state of the identification data in the display control information.

For this reason, in accordance with the state transition information and the prescription information, the information processing device according to the present invention can easily return a selection or non-selection state of the identification data, for example, to a past selection state.

Further, in the foregoing arrangement, the information processing device according to the present invention may be arranged so as to further include a storage device (e.g., information storage section 20) in which to store the state transition information recorded by the recording means.

According to the foregoing arrangement, the storage device has the state transition information stored therein, so that the information processing device according to the present invention can keep a record of a history up until the current display state. For this reason, with reference to displayed information, for example, in cases where a function such as the camera function is executed and then an instruction is given to execute another function next, it is possible to shift from (i) the display state in which an instruction was given to execute the camera function to (ii) a display related to the next operation.

Thus, the next operation can be performed starting from a display state in which the current operation state is reflected. Therefore, for example, in cases where the camera function is activated and then the next function is executed by performing a similar operation, it is possible to avoid redundantly performing an operation similar to the operation performed in executing the camera function.

Further, in the foregoing arrangement, the information processing device according to the present invention may be arranged such that the storage device further contains the identification data and the scenario data.

According to the foregoing arrangement, the storage device contains the identification data and the scenario data. Therefore, even in cases where the information processing device cannot acquire identification data and/or scenario data from an external device, the information processing device can generate display control information that realizes a plurality of display patterns by combining the identification data and the scenario data that are stored in the storage device.

For this reason, even in cases where the information processing device does not acquire identification data and/or scenario data from another information processing device, the information processing device can provide a plurality of display patterns by combining the identification data and the scenario data that are stored in the storage device.

Further, in the foregoing arrangement, the information processing device according to the present invention may be arranged such that: the storage device further contains table information serving as information for associating the identification data and the scenario data with each other; and the generating means specifies a combination of the scenario data and the identification data and thereby generates display control information in accordance with the table information.

The storage device of the information processing device according to the present invention has the table information. For this reason, the generating means can easily specify a combination of the scenario data and the identification data with reference to the table information.

Therefore, the information processing device according to the present invention can display the identification data in a specific display style.

Further, in the foregoing arrangement, the information processing device according to the present invention is preferably arranged such that the table information contains information indicative of correspondence between a position on the display area as prescribed by the scenario data and identification data to be located in the position thus prescribed.

Further, in the foregoing arrangement, the information processing device according to the present invention may be arranged so as to further include changing means for changing the table information when the input means receives, as input information, an instruction to change the table information.

According to the foregoing arrangement, the provision of the changing means makes it possible to change the table information in accordance with input information. For this reason, the combination of the identification data and the scenario data can be changed. Therefore, the information processing device according to the present invention can display the identification data in a display style desired by a user.

Further, in the foregoing arrangement, the information processing device according to the present invention is preferably arranged so as to further include scenario data changing means (e.g., scenario data changing section) for changing the scenario data when the input means receives, as input information, an instruction to change the scenario data.

According to the foregoing arrangement, the provision of the scenario data changing means makes it possible to change the scenario data in accordance with input information. For this reason, the generating means can generate, in accordance with the scenario data thus changed and the identification data, display control information by which to display icon data in a different display style.

In such a case where the display style of icon data is changed, it is only necessary to change only the scenario data, or it is possible to change the identification data to another piece of identification data. For this reason, the display style of identification data can be easily changed without the need of a process of changing a large program such as a UNIX window manager.

Further, in the foregoing arrangement, the information processing device according to the present invention is preferably arranged such that the generating means changes the combination of the scenario data and the identification data in accordance with input information received by the input means.

According to the foregoing arrangement, in a display style based on a combination of scenario data and identification data that corresponds to input information, the information processing device according to the present invention can display the identification data.

Therefore, by changing the combination of the identification data and the scenario data in accordance with input information, the generating means can generate display control information by which the identification data is displayed in a display style desired by a user.

This makes it unnecessary for the information processing device according to the present invention to prestore data on all display patterns of identification data that can be displayed, so that the amount of data to be stored can be reduced, for example, as compared with an arrangement in which the data on all the display patterns needs to be prestored in the storage device.

Further, in the foregoing arrangement, the information processing device according to the present invention may be arranged such that the generating means changes the combination of the scenario data and the identification data by changing the scenario data to another piece of scenario data.

According to the foregoing arrangement, the information processing device according to the present invention can change the scenario data in accordance with input information. For this reason, the generating means can generate display control information by which the identification data is displayed in a display style desired by a user.

Therefore, the information processing device according to the present invention can easily make a shift to a display style desired by a user.

Further, in the foregoing arrangement, the information processing device according to the present invention is preferably arranged such that the generating means changes the combination of the scenario data and the identification data by changing the identification data to another piece of identification data.

According to the foregoing arrangement, the information processing device according to the present invention can change the identification data to another piece of identification data. For this reason, the generating means can generate the display control information by changing the identification data to identification data desired by a user.

Therefore, the information processing device according to the present invention can easily make a shift to a display style desired by a user.

Further, in the foregoing arrangement, the information processing device according to the present invention is preferably arranged such that: the scenario data further contains timing-prescribing information for prescribing a timing of change in display state in the display section; and the instructing means instructs the generating means on a timing of change in display control information in accordance with the timing-prescribing information.

According to the foregoing arrangement, the scenario data contains the timing-prescribing information. Therefore, the instructing means can instructs the generating means to make changes in display control information at various timings prescribed by the timing-prescribing information.

Therefore, the information processing device according to the present invention can make changes in display state at various timings. Furthermore, the information processing device according to the present invention can easily make a shift to a desired timing of change simply by rewriting a description of the scenario data containing the timing-prescribing information.

Further, in the foregoing arrangement, the information processing device according to the present invention is preferably arranged such that the identification data contains information for deciding, in accordance with input information, received by the input means, which indicates designation of a selection or non-selection state, whether the process specified by the identification data is valid or invalid.

According to the foregoing arrangement, the identification data contains information for deciding, in accordance with input information, received by the input means, which indicates designation of a selection or non-selection state, whether the process specified by the identification data is valid or invalid. For this reason, the generating means can generate display control information containing information for deciding, in accordance with the state of the identification data as designated by the input information, whether the process is valid or invalid.

For this reason, by designating identification data to be a selection state or a non-selection state, the information processing device can decide whether a function specified by the identification data is valid or invalid. The "state in which the function is valid" here means, for example, a state in which the function can be executed by activating the function.

Further, in the foregoing arrangement, the information processing device according to the present invention is preferably arranged so as to further include data acquisition means (e.g., function execution control section 16 and antenna 8) for acquiring the identification data and the scenario data from outside.

According to the present invention, the information processing device according to the present invention includes the data acquisition means, and therefore can acquire scenario data and/or identification data retained by an external information processing device.

Therefore, the number of pieces of scenario data and/or the number of pieces of identification data can be increased, so that the number of display patterns that can be displayed can be increased and the most recent scenario data and identification data can be obtained.

Further, in the foregoing arrangement, the information processing device according to the present invention is preferably arranged such that the identification data contains vector image data.

Since the identification data contains vector image data, an image displayed based on the identification data can be scaled up or down while maintaining the high quality of the image.

Further, in the foregoing arrangement, the information processing device according to the present invention is preferably arranged such that the identification data contains parameter information necessary for executing a function specified by the identification data.

According to the foregoing arrangement, the identification data contains parameter information necessary for executing a function specified by the identification data. For this reason, simply by selecting specific identification data, a function specified by the identification data can be provided with a parameter and executed.

Further, in the foregoing arrangement, the information processing device according to the present invention may be arranged such that the scenario data is XML data.

Since the scenario data is XML data, the scenario data can contain, with use of a script language such as ECMA script or Java script, a description for managing, in accordance with input information, a display of a selection or non-selection state of identification data or a display state indicative of such a state of identification as a change in location.

Further, in the foregoing arrangement, the information processing device according to the present invention is preferably arranged such that the changing means changes an association between the scenario data and the identification data in accordance with input information, received by the input means, which indicates an instruction to change the association between the scenario data and the identification data.

Further, in the foregoing arrangement, the information processing device according to the present invention may be arranged such that the changing means changes the association between the scenario data and the identification data by changing the table information to another piece of table information.

It should be noted that each of the means of the information processing device may be realized by a computer. In this case, a computer-readable recording medium containing an information processing device control program for realizing the information processing device by a computer by operating the computer as each of the means is also encompassed in the scope of the present invention.

The present invention is not limited to the description of the embodiments above, but may be altered by a skilled person within the scope of the claims. An embodiment based on a proper combination of technical means disclosed in different embodiments is encompassed in the technical scope of the present invention.

INDUSTRIAL APPLICABILITY

The mobile communication device 1 is arranged such that the information storage section 20 contains information, separated into scenario data 21 and an icon data group 22, which is to be displayed as a menu screen. Moreover, by changing a combination of the scenario data 21 and the icon data group 22, the mobile communication device 1 can generate, with use of the display data generating section 14 of the main control section 10, display data for displaying an icon 301.

For this reason, the present invention can be widely used for information processing devices each including a display section for displaying information. Possible examples of the information processing devices include a mobile phone, a PDA, and a television. Each of these information processing devices has a display section in which a menu can be displayed as described above, in which a specific application is activated in accordance with an instruction given from a user, and in which a display state can be changed to another menu.

**Claims**

**1.** An information processing device including a display section for displaying information in a specific display style, the information processing device comprising:

generating means for generating, in accordance with (i) identification data for specifying a process that is executable in the information processing device and (ii) scenario data serving as information for prescribing a display of the identification data on a display area of the display section, display control information by which the identification data is displayed in the specific display style; and

display control means for performing display control on the display section in accordance with the display control information generated by the generating means.

2. The information processing device as set forth in claim 1, further comprising input means for receiving input information from outside, wherein

the generating means generates, in accordance with the scenario data and the identification data, display control information by which the identification data is displayed in a display style corresponding to the input information received by the input means.

3. The information processing device as set forth in claim 2, further comprising:

recording means for recording state transition information serving as history information indicative of a display state of the identification data in the display section; and

instructing means for instructing, in accordance with the state transition information recorded by the recording means, the generating means to change the display control information.

4. The information processing device as set forth in claim 3, wherein:

the scenario data contains prescription information for prescribing a change in display state of the identification data in the display section in accordance with the state transition information; and

when the input means has received, as input information, information that gives an instruction to change the display state, the instructing means instructs, in accordance with the state transition information recorded by the recording means and the prescription information, the generating means to change the display control information.

5. The information processing device as set forth in claim 4, wherein:

the state transition information is history information expressing, with specific symbol information, the display state of the identification data in the display section;

the prescription information contains information, associated with the symbol information, which indicates changes in the display state; and

the instructing means instructs, in accordance with the state transition information and the prescription information, the generating means to change the display control information so that the display state corresponds to the symbol information.

6. The information processing device as set forth in claim 4 or 5, wherein the instructing means instructs, in accordance with the state transition information recoded by the recording means and the prescription information, the generating means to change information indicative of a display of a selection state of the identification data in the display control information.

7. The information processing device as set forth in any one of claims 3 to 6, further comprising a storage device in which to store the state transition information recorded by the recording means.

8. The information processing device as set forth in claim 7, wherein the storage device further contains the identification data and the scenario data.

9. The information processing device as set forth in claim 8, wherein:

the storage device further contains table information serving as information for associating the identification data and the scenario data with each other; and

the generating means specifies a combination of the scenario data and the identification data and thereby generates display control information in accordance with the table information.

10. The information processing device as set forth in claim 9, wherein the table information contains information indicative of correspondence between a position on the display area as prescribed by the scenario data and identification data to be located in the position thus prescribed.

**11.** The information processing device as set forth in claim 9 or 10, further comprising changing means for changing the table information when the input means receives, as input information, an instruction to change the table information.

**12.** The information processing device as set forth in any one of claims 2 to 11, further comprising scenario data changing means for changing the scenario data when the input means receives, as input information, an instruction to change the scenario data.

**13.** The information processing device as set froth in any one of claims 2 to 12, wherein when the input means receives, as input information, an instruction to change a combination of the scenario data and the identification data, the generating means changes the combination of the scenario data and the identification data for generating the display control information.

**14.** The information processing device as set forth in claim 13, wherein the generating means changes the combination of the scenario data and the identification data by changing the scenario data to another piece of scenario data.

**15.** The information processing device as set forth in claim 13, wherein the generating means changes the combination of the scenario data and the identification data by changing the identification data to another piece of identification data.

**16.** The information processing device as set forth in claim 3, wherein:

the scenario data further contains timing-prescribing information for prescribing a timing of change in display state in the display section; and
the instructing means instructs the generating means on a timing of change in display control information in accordance with the timing-prescribing information.

**17.** The information processing device as set forth in any one of claims 2 to 16, wherein the identification data contains information for deciding, in accordance with input information, received by the input means, which indicates designation of a selection or non-selection state, whether the process specified by the identification data is valid or invalid.

**18.** The information processing device as set forth in any one of claims 1 to 11, further comprising data acquisition means for acquiring the identification data and the scenario data from outside.

**19.** The information processing device as set forth in any one of claims 1 to 18, wherein the identification data contains vector image data.

**20.** The information processing device as set forth in any one of claims 1 to 19, wherein the identification data contains parameter information necessary for executing a function specified by the identification data.

**21.** The information processing device as set forth in any one of claims 1 to 20, wherein the scenario data is XML data.

**22.** The information processing device as set forth in claim 11, wherein the changing means changes an association between the scenario data and the identification data in accordance with input information, received by the input means, which indicates an instruction to change the association between the scenario data and the identification data.

**23.** The information processing device as set forth in claim 22, wherein the changing means changes the association between the scenario data and the identification data by changing the table information to another piece of table information.

**24.** A method for controlling an information processing device including a display section for displaying information in a specific display style, the method comprising the steps of:

generating, in accordance with (i) identification data for specifying a process that is executable in the information processing device and (ii) scenario data serving as information for prescribing a display of the identification data on a display area of the display section, display control information by which the identification data is displayed in the specific display style; and
performing display control on the display section in accordance with the display control information thus generated.

**25.** An information processing device control program for operating a computer as each means of an information processing device as set forth in any one of claims 1 to 23.

**26.** A computer-readable recording medium having an information processing device control program as set forth in claim 25 recorded therein.

FIG. 1

FIG. 1

1 : MOBILE COMMUNICATION DEVICE

10 : MAIN CONTROL SECTION

DECISION KEY 9

RETURN KEY 10

ARROW KEY 3

NUMERIC KEYPAD 4

DISPLAY SECTION 2

20 : INFORMATION STORAGE SECTION

21 SCENARIO DATA

21 SCENARIO DATA

22 ICON DATA GROUP

24 ICON DATA

24 ICON DATA

22 ICON DATA GROUP

24 ICON DATA

24 ICON DATA

25 SELECTION-INDICATING IMAGE DATA

23 TABLE INFORMATION

INPUT SECTION 11

SCENARIO DATA ACQUISITION SECTION 12

ICON DATA ACQUISITION SECTION 13

TABLE INFORMATION CHANGING SECTION 17

DISPLAY CONTROL SECTION 15

TRANSITION STATE RECORDING SECTION 28

DISPLAY DATA GENERATING SECTION 14

CHANGE INSTRUCTION SECTION 29

DECISION STATE TRANSITION INFORMATION STORAGE SECTION 26

DECISION STATE TRANSITION INFORMATION 27

FUNCTION EXECUTION CONTROL SECTION 16

IMAGING SECTION 5

SPEAKER 6

MICROPHONE 7

ANTENNA 8

EP 1 959 342 A1

32

## FIG. 2

FIG. 3

FIG. 4 (b)

FIG. 4 (a)

FIG. 5

501a

501b

501c

501d

FIG. 6

| 1 | 301a |
| 2 | 301b |
| 3 | 301c |
| 4 | 301d |

FIG. 7

FIG. 8

```
                    ┌──────────────┐
                    │    START     │
                    └──────┬───────┘
                           │
                           ▼
        ┌─────────────────────────────────┐
        │    ACQUIRE SCENARIO DATA        │ ～S1
        │    CORRESPONDING TO INPUT       │
        └────────────────┬────────────────┘
                         │
                         ▼
        ┌─────────────────────────────────┐
        │ ACQUIRE IMAGE DATA INDICATIVE   │ ～S2
        │    OF ICON TO BE DISPOSED       │
        └────────────────┬────────────────┘
                         │
                         ▼
        ┌─────────────────────────────────┐
        │    ACQUIRE INFORMATION FOR      │ ～S3
        │     SPECIFYING FUNCTION         │
        └────────────────┬────────────────┘
                         │
                         ▼
        ┌─────────────────────────────────┐
        │    DISPLAY MENU SCREEN          │ ～S4
        └────────────────┬────────────────┘
                         │
                         ▼
                    ┌──────────────┐
                    │     END      │
                    └──────────────┘
```

FIG. 9

START

ACCEPT INPUT INFORMATION — S11

CHANGE IN DISPLAY STATE? — S12
NO

YES

PERFORM REDISPLAY IN DISPLAY STATE THUS CHANGED — S13

ACCEPTED INSTRUCTION TO EXECUTE FUNCTION? — S14
NO

YES

EXECUTE FUNCTION — S15

END

FIG. 10

FIG. 11

FIG. 12

| SCENARIO ( 1 ) | SCENARIO ( 2 ) |
|---|---|

No. 1 ----501a

No. 2 ----501b

No. 1    No. 2

501c    501d

FIG. 13

| TABLE NUMBER | ICON DATA | FUNCTION |
|---|---|---|
| No. 1 | | CAMERA |
| No. 2 | | MAIL |
| No. 3 | | CAMERA |
| No. 4 | | CALENDAR |
| No. 5 | | CALCULATOR |
| No. 6 | | NETWORK COMMUNICATION |

FIG. 14

| | TABLE NUMBER No. 1 | TABLE NUMBER No. 2 |
|---|---|---|
| A | | |
| B | | |
| C | | |

FIG. 15

|   | SCENARIO ( 1 ) | SCENARIO ( 2 ) |
|---|---|---|
| A | | |
| B | | |
| C | | |

FIG. 16

|  | TABLE NUMBER 1 | TABLE NUMBER 2 |
|---|---|---|
| IMAGE DISPLAY AREA $\alpha$ | IMAGE $\alpha$ 1 | IMAGE $\alpha$ 2 |
| IMAGE DISPLAY AREA $\beta$ | IMAGE $\beta$ 1 | IMAGE $\beta$ 2 |

FIG. 17

~ 701

~ 702

~ 703

~ 704

~ 705

FIG. 18 (a)

FIG. 18 (b)

EP 1 959 342 A1

FIG. 19 (b)

FIG. 19 (a)

FIG. 20

FIG. 21

FIG. 22

| SELECTED-ICON DISPLAY INFORMATION | SELECTION-INDICATING-IMAGE DISPLAY INFORMATION | DECORATION INFORMATION (ICON DATA DISPLAY INFORMATION) | (TRANSITION INFORMATION) | (TIMING-PRESCRIBING INFORMATION) |
|---|---|---|---|---|
| 30 | 31 | 33 | 34 | 35 |

EP 1 959 342 A1

FIG. 23 (a)

301a

401

301b

301c

301d

FIG. 23 (b)

301a

401

301b

301c

301d

FIG. 23 (c)

301a

301b

401

301c

301d

FIG. 24

FIG. 25

| | DISPLAY POSITION | FUNCTION | TRANSITION INFORMATION | | SELECTED-ICON DISPLAY INFORMATION |
|---|---|---|---|---|---|
| | | | LOWER KEY INPUT | UPPER KEY INPUT | |
| 1 | DOTTED FRAME 601a | MAIL | 1⇒2⇒3 | 1 | MAIL DISPLAY LARGE |
| 2 | DOTTED FRAME 601b | | 2⇒3 | 2⇒1 | MAIL DISPLAY LARGE |
| 3 | DOTTED FRAME 601c | CAMERA | 3⇒4⇒5 | 3⇒2⇒1 | CAMERA DISPLAY LARGE |
| 4 | DOTTED FRAME 601d | | 4⇒5 | 4⇒3 | CAMERA DISPLAY LARGE |
| 5 | DOTTED FRAME 601e | CALENDAR | 5⇒6⇒7 | 5⇒4⇒3 | CALENDAR DISPLAY LARGE |
| 6 | DOTTED FRAME 601f | | 6⇒7 | 6⇒5 | CALENDAR DISPLAY LARGE |
| 7 | DOTTED FRAME 601g | TELEPHONE | 7 | 7⇒6⇒5 | TELEPHONE DISPLAY LARGE |

EP 1 959 342 A1

FIG. 26

| TRANSITION STATE | TRANSITIONAL PERIOD (SECONDS) | DISPLAY ANIMATION DATA |
|---|---|---|
| 1⇔3 | 20 | ANIMATION x |
| 3⇔5 | 10 | ANIMATION y |
| 5⇔7 | 10 | ANIMATION z |

FIG. 27

| TRANSITION STATE | OBJECT | TRANSITIONAL PERIOD | MOVEMENT SPEED | CONTENT OF TRANSITION |
|---|---|---|---|---|
| 1->3 | FIGURE A | NONE SPECIFIED | 1 dot/s | MOVE TO COORDINATE C |
| 3->1 | FIGURE A | NONE SPECIFIED | 2 dot/s | MOVE TO COORDINATE A |
| 3->5 | IMAGE B | 5 SECONDS | NONE SPECIFIED | CHANGE TO IMAGE C |
| 5->3 | ICON D | 10 SECONDS | NONE SPECIFIED | ICON D IN SELECTION STATE |

EP 1 959 342 A1

FIG. 28

| DISPLAY STATE | 1 |
|---|---|
| DISPLAY POSITION | DOTTED FRAME 601a |
| SELECTED-ICON DISPLAY INFORMATION | MAIL DISPLAY LARGE |

**EP 1 959 342 A1**

<table>
<tr><td align="center">**INTERNATIONAL SEARCH REPORT**</td><td colspan="2">International application No.<br>PCT/JP2006/323347</td></tr>
</table>

A. CLASSIFICATION OF SUBJECT MATTER
*G06F3/14(2006.01)i*

According to International Patent Classification (IPC) or to both national classification and IPC

B. FIELDS SEARCHED

Minimum documentation searched (classification system followed by classification symbols)
G06F3/01, 3/048, 3/14-3/153

Documentation searched other than minimum documentation to the extent that such documents are included in the fields searched
Jitsuyo Shinan Koho        1922-1996    Jitsuyo Shinan Toroku Koho    1996-2006
Kokai Jitsuyo Shinan Koho  1971-2006    Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2004-522367 A  (KTFreeTel Co., Ltd.),<br>22 July, 2004 (22.07.04),<br>Page 3; Claim 7<br>& KR 2002018986 A       & KR 405048 B<br>& WO 2003/023986 A1     & US 2004/013246 A1<br>& CN 1473396 A          & EP 1425861 A1<br>& AU 2002239120 A1 | 1-26 |

☐ Further documents are listed in the continuation of Box C.     ☐ See patent family annex.

* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>14 December, 2006 (14.12.06) | Date of mailing of the international search report<br>26 December, 2006 (26.12.06) |
|---|---|
| Name and mailing address of the ISA/<br>Japanese Patent Office | Authorized officer |
| Facsimile No. | Telephone No. |

Form PCT/ISA/210 (second sheet) (April 2005)

60

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MATT CHAPMAN.** *Window Managers for X,* 23 May 2005, http://xwinman.org/>
- *Selecting a Window Manager,* 23 May 2005, http://www.linux.or.jp/JF/JFdocs/Xwindow-User-HOWTO -3.html>

- Macromedia Flash MX 2004. Macromedia, Inc, 23 May 2005
- Product Information'', ''Enjoying Useful Functions of W21CA. Casio Computer Co., Ltd, 23 May 2005